# EUROPÄISCHE PATENTSCHRIFT

(11) **EP 2 801 392 B1**
(45) Veröffentlichungstag und Bekanntmachung des Hinweises auf die Patenterteilung: **29.06.2016**
(21) Anmeldenummer: 13166652.1
(22) Anmeldetag: 06.05.2013
(51) Int. Cl.: A62C 5/00, A62C 99/00

(54) **Inertisierungsverfahren sowie Anlage zur Sauerstoffreduzierung**
Inerting method and system for oxygen reduction
Procédé d'inertisation et installation de réduction d'oxygène

(43) Veröffentlichungstag der Anmeldung: 12.11.2014
(73) Patentinhaber: Amrona AG, 6304 Zug (CH)
(72) Erfinder: Wagner, Ernst-Werner, 29308 Winsen/Aller (DE)
(74) Vertreter: Rupprecht, Kay

(56) Entgegenhaltungen:
- EP-A1- 0 163 242
- WO-A1-2012/076721
- DE-A1- 10 343 342
- GB-A- 2 374 007
- JP-A- H10 263 109
- US-A- 5 308 382
- US-A- 5 496 388

## Beschreibung

Die vorliegende Erfindung betrifft ein Inertisierungsverfahren, bei welchem in der Raumatmosphäre eines umschlossenen Raumes ein vorgebbarer und im Vergleich zur normalen Umgebungsluft reduzierter Sauerstoffgehalt eingestellt und gehalten wird, und bei welchem in einem Bedarfsfall der Sauerstoffgehalt in der Raumatmosphäre des umschlossenen Raumes kurzfristig weiter reduziert wird.

Die Erfindung betrifft ferner eine entsprechende Anlage zur Sauerstoffreduzierung.

Das erfindungsgemäße Inertisierungsverfahren bzw. die erfindungsgemäße Inertisierungsanlage dient beispielsweise zur Minderung des Risikos und zum Löschen von Bränden in einem zu überwachenden Schutzraum, wobei zur Brandverhütung bzw. Brandbekämpfung der umschlossene Raum auf unterschiedlichen Absenkungsniveaus dauerinertisiert wird.

Als weitere Anwendungsbeispiele für das erfindungsgemäße Inertisierungsverfahren sei das Bereitstellen von Trainingsbedingungen zum Hypoxietraining in einem umschlossenen Raum genannt, bei dem der Sauerstoffgehalt reduziert ist. In solch einem Raum ist ein Training unter künstlich hergestellten Höhenbedingungen möglich, welches auch als "normobares Hypoxietraining" bezeichnet wird. Weiter sei als Anwendungsbeispiel die Lagerung von Lebensmitteln, vorzugsweise Kernobst, unter einer Controlled Atmosphere (CA) genannt, in der u. a. der prozentual anteilige Luftsauerstoff geregelt wird, um den Alterungsprozess leichtverderblicher Ware zu verlangsamen.

Dem Grundprinzip der Inertisierungstechnik zur Brandverhütung liegt die Erkenntnis zugrunde, dass in umschlossenen Räumen, die nur gelegentlich von Mensch oder Tier betreten werden und deren Einrichtung sensibel auf Wassereinwirkung reagiert, der Brandgefahr dadurch begegnet werden kann, dass die Sauerstoffkonzentration in dem betroffenen Bereich auf einen Wert von im Mittel beispielsweise etwa 15 Vol.-% abgesenkt wird. Bei einer solchen (reduzierten) Sauerstoffkonzentration können sich die meisten brennbaren Materialien nicht mehr entzünden. Haupteinsatzgebiet der Inertisierungstechnik zur Brandverhütung sind dementsprechend auch die EDV-Bereiche, elektrische Schalt- und Verteilerräume, umschlossene Einrichtungen sowie Lagerbereiche mit hochwertigen Wirtschaftsgütern. Die bei diesem Verfahren resultierende Brandverhütungswirkung beruht auf dem Prinzip der Sauerstoffverdrängung. Normale Umgebungsluft besteht bekanntlich zu 21 Vol.-% aus Sauerstoff, zu 78 Vol.-% aus Stickstoff und zu 1 Vol.-% aus sonstigen Gasen. Zur Brandverhütung wird durch Einleiten eines Sauerstoff verdrängenden Gases, wie beispielsweise Stickstoff, der Sauerstoffanteil in der Raumatmosphäre des umschlossenen Raumes verringert. Es ist bekannt, dass eine Brandverhütungswirkung bereits dann einsetzt, wenn der Sauerstoffanteil unter etwa 15 Vol.-% sinkt. Abhängig von den in dem Schutzraum vorhandenen brennbaren Materialien kann ein weiteres Absenken des Sauerstoffanteils auf beispielsweise 12 Vol.-% erforderlich sein.

Eine derartige Inertisierungsanlage ist dem Prinzip nach aus dem Stand der Technik bekannt. Beispielsweise wird in der Druckschrift DE 198 11 851 A1 eine Inertisierungsanlage beschrieben, welche ausgelegt ist, den Sauerstoffgehalt in einem umschlossenen Raum (nachfolgend auch "Schutzraum genannt) auf ein bestimmtes Grundinertisierungsniveau abzusenken, und im Falle eines Brandes den Sauerstoffgehalt rasch auf ein bestimmtes Vollinertisierungsniveau weiter abzusenken.

Unter dem hierin verwendeten Begriff "Grundinertisierungsniveau" ist ein im Vergleich zum Sauerstoffgehalt der normalen Umgebungsluft reduzierter Sauerstoffgehalt zu verstehen, wobei allerdings dieser reduzierte Sauerstoffgehalt noch keinerlei Gefährdung von Personen oder Tieren bedeutet, so dass diese den Schutzraum noch problemlos (d.h. ohne besondere Schutzmaßnahmen wie beispielsweise Sauerstoffmasken) betreten können. Das Grundinertisierungsniveau entspricht beispielsweise einem Sauerstoffgehalt in dem Schutzraum von 15 bis 17 Vol.-%.

Hingegen ist unter dem Begriff "Vollinertisierungsniveau" ein im Vergleich zum Sauerstoffgehalt des Grundinertisierungsniveaus weiter reduzierter Sauerstoffgehalt zu verstehen, bei welchem die Entflammbarkeit der meisten Materialien bereits soweit herabgesetzt ist, dass sich diese nicht mehr entzünden können. Abhängig von der in dem betroffenen Schutzraum vorhandenen Brandlast liegt das Vollinertisierungsniveau in der Regel bei etwa 12 bis 14 Vol.-% Sauerstoffkonzentration.

Bei dem aus der Druckschrift DE 198 11 851 A1 bekannten mehrstufigen Inertisierungsverfahren, bei welchem eine stufenweise Absenkung des Sauerstoffgehalts vorgenommen wird, kommt demnach eine Inertisierungstechnik zur Brandverhütung zum Einsatz, bei welcher der Sauerstoffgehalt in dem Schutzraum zunächst auf ein bestimmtes Absenkungsniveau (Grundinertisierungsniveau) von beispielsweise 17 Vol.-% abgesenkt wird, wobei im Falle eines Brandes oder bei Bedarf eine weitere Absenkung des Sauerstoffgehaltes auf ein bestimmtes Vollinertisierungsniveau von beispielsweise 13,8 Vol.-% oder darunter vorgenommen wird. Wenn bei einem solchen zweistufigen Inertisierungsverfahren zum Absenken des Sauerstoffgehaltes auf das erste Absenkungsniveau (Grundinertisierungsniveau) ein Inertgasgenerator, wie beispielsweise ein Stickstoffgenerator, als Inertgasquelle zum Einsatz kommt, kann die Anzahl der zur Vollinertisierung benötigten Hochdruckgasspeicherbehälter, in welchen das Sauerstoff verdrängende Gas oder Gasgemisch (nachfolgend auch einfach "Inertgas" genannt) in komprimierter Form gelagert wird, klein gehalten werden.

Um das vorstehend beschriebene und an sich bekannte zweistufige Inertisierungsverfahren umsetzen zu können, sind allerdings relativ hohe Investitionskosten erforderlich, da das zweistufige Inertisierungsverfahren besondere Anforderungen an die zur Bereitstellung des Inertgases erforderlichen Inertgasquellen stellt. Im Einzelnen sind bei herkömmlichen zweistufig betriebenen Inertisierungsanlage durchweg zwei separate Inertgasquellen vorgesehen, da zum Einstellen eines bestimmten Inertisierungsniveaus (Absenkungsniveaus) unterschieden werden muss, ob in der Raumatmosphäre ein Grund- oder ein Vollinertisierungsniveau einzustellen ist. Hierbei ist zu berücksichtigen, dass - ausgehend von einem bereits eingestellten Grundinertisierungsniveau - die Absenkung auf ein Vollinertisierungsniveau gemäß einem vorab festgelegten Ereignisablauf und insbesondere innerhalb einer festgelegten Zeitperiode nach Alarmierung zu erfolgen hat. Hingegen ist es für das Einstellen für das Grundinertisierungsniveau nicht erforderlich, dass dies gemäß einer vorab festgelegten Inertisierungskurve erfolgt.

Unter dem hierin verwendeten Begriff "Inertisierungskurve" ist der zeitliche Verlauf des Sauerstoffgehalts bei der Einleitung von Sauerstoff verdrängenden Gasen (Inertgasen) in die Raumatmosphäre des Schutzraumes zu verstehen.

Dadurch, dass zum Einstellen eines bestimmten Inertisierungsniveaus unterschieden werden muss, ob in der Raumatmosphäre ein Grund- oder ein Vollinertisierungsniveau einzustellen ist, ergeben sich unterschiedliche Anforderungen an die Inertgasquellen, die zum Einstellen des Grund- bzw. Vollinertisierungsniveaus das entsprechende Inertgas bereitstellen müssen. Im Falle einer Absenkung auf das Vollinertisierungsniveau ist im Hinblick auf die zum Einsatz kommende Inertgasquelle zu berücksichtigen, dass diese pro Zeiteinheit eine entsprechend große Menge an Inertgas zur Verfügung stellen kann, damit innerhalb der vorgegebenen Zeitperiode das Vollinertisierungsniveau in der Raumatmosphäre des Schutzraumes eingestellt werden kann. Dementsprechend muss die zum Absenken auf ein Vollinertisierungsniveau zum Einsatz kommende Inertgasquelle eine entsprechende Kapazität aufweisen.

Diese Anforderung gilt allerdings nicht für die Inertgasquelle, wenn lediglich das Grundinertisierungsniveau einzustellen ist. Wie bereits ausgeführt, ist es in der Regel hierbei nicht erforderlich, dass die Absenkung auf ein Grundinertisierungsniveau gemäß einer vorab festgelegten Inertisierungskurve und insbesondere innerhalb einer festgelegten Zeitperiode zu erfolgen hat. Dementsprechend kann die für die Absenkung auf ein Grundinertisierungsniveau zum Einsatz kommende Inertgasquelle im Hinblick auf ihre Ausgabekapazität entsprechend geringer dimensioniert sein.

Bei der praktischen Anwendung des zweistufigen Inertisierungsverfahrens kommen aus diesen Gründen in der Regel zwei separate Inertgasquellen zum Einsatz: ein Stickstoffgenerator, der pro Zeiteinheit nur eine relativ geringe Menge an Inertgas (hier: mit Stickstoff angereicherte Luft) bereitstellen kann und zum Einstellen und Halten eines Grundinertisierungsniveaus herangezogen wird; und ein Hochdruckgasspeicherbehälter, in welchem ein Sauerstoff verdrängendes Gas oder Gasgemisch in komprimierter Form gelagert ist, um im Bedarfsfall kurzfristig in der Raumatmosphäre des umschlossenen Raumes ein Vollinertisierungsniveau einstellen zu können.

Die Verwendung von zwei separaten Inertgasquellen zur Realisierung des zweistufigen Inertisierungsverfahrens bringt den Nachteil der relativ hohen Anfangs-Investitionskosten mit sich. Darüber hinaus ist der bereitzustellende Aufstellraum für die beiden separaten Inertgasquellen (Stickstoffgenerator einerseits und Hochdruckgasspeicherbehälter andererseits) in manchen Anwendungsfällen nicht ohne größere bauliche Maßnahmen realisierbar.

Die Druckschrift WO 2012/076721 A1 betrifft ein Inertisierungsverfahren mit den Merkmalen des Oberbegriffes des unabhängigen Patentanspruchs 1.

Auf Grundlage dieser Problemstellung liegt der vorliegenden Erfindung die Aufgabe zugrunde, ein Inertisierungsverfahren bzw. eine Inertisierungsanlage anzugeben, bei der die laufenden Betriebskosten und die Anfangs-Investitionen im Vergleich zu herkömmlichen Lösungen reduziert werden können, ohne dabei die Effizienz der Anlage zu beeinflussen.

Diese Aufgabe wird im Hinblick auf das Verfahren durch den Gegenstand des unabhängigen Patentanspruches 1 und im Hinblick auf die Vorrichtung (Anlage zur Sauerstoffreduzierung) durch den Gegenstand des nebengeordneten Patentanspruches 10 gelöst.

Im Hinblick auf das erfindungsgemäße Verfahren sind vorteilhafte Weiterbildungen in den Ansprüchen 2 bis 9 angegeben. Vorteilhafte Weiterbildungen der erfindungsgemäßen Inertisierungsanlage sind in den abhängigen Ansprüchen 11 bis 13 genannt.

Demgemäß wird nach der Erfindung insbesondere eine Anlage zur Sauerstoffreduzierung vorgeschlagen, bei welcher in der Raumatmosphäre eines umschlossenen Raumes ein vorgebbarer und im Vergleich zur normalen Umgebungsluft reduzierter Sauerstoffgehalt eingestellt und gehalten wird. Die Anlage weist ein Kompressorsystem zum Komprimieren eines Anfangs-Gasgemisches und ein mit dem Kompressorsystem verbundenes Gasseparationssystem auf, in welchem zumindest ein Teil des in dem komprimierten Anfangs-Gasgemisches enthaltenen Sauerstoffs abgetrennt wird. Das Gasseparationssystem ist ausgelegt, wahlweise in einem VPSA-Modus oder in einem PSA-Modus betrieben zu werden.

Unter dem hierin verwendeten Begriff "Anfangs-Gasgemisch" ist allgemein ein Gasgemisch zu verstehen, welches neben dem Bestandteil Sauerstoff insbesondere noch Stickstoff und ggf. weitere Gase, wie beispielsweise Edelgase aufweist. Als Anfangs-Gasgemisch kommt beispielsweise normale Umgebungsluft in Frage, d.h. ein Gasgemisch, welches zu 21 Vol.-% aus Sauerstoff, zu 78 Vol.-% aus Stickstoff und zu 1 Vol.-% aus sonstigen Gasen besteht. Denkbar ist allerdings auch, dass als Anfangsgasgemisch ein Teil der in dem umschlossenen Raum enthaltenden Raumluft verwendet wird, wobei diesem Raumluftanteil vorzugsweise noch Frischluft beigemischt ist.

Unter einem in einem VPSA-Modus betriebenen Gasseparationssystem ist allgemein eine nach dem Vakuum-Druckwechseladsorptions-Prinzip (Vacuum Pressure Swing Adsorption-VPSA) arbeitende Anlage zur Bereitstellung von mit Stickstoff angereichter Luft zu verstehen. Erfindungsgemäß kommt in der Inertisierungsanlage als Gasseparationssystem eine derartige VPSA-Anlage zum Einsatz, die allerdings im Bedarfsfall in einem PSA-Modus betrieben wird. Die Abkürzung "PSA" steht für "Pressure Swing Adsorption", was üblicherweise als Druckwechseladsorptionstechnik bezeichnet wird.

Um den Betriebsmodus des bei der erfindungsgemäßen Lösung zum Einsatz kommenden Gasseparationssystems von VPSA auf PSA umschalten zu können, ist nach dem erfindungsgemäßen Verfahren vorgesehen, dass der Grad der von dem Kompressorsystem erwirkten Komprimierung des Anfangs-Gasgemisches entsprechend erhöht wird. Im Einzelnen ist im Hinblick auf das erfindungsgemäße Inertisierungsverfahren vorgesehen, dass zunächst ein Anfangs-Gasgemisch, welches Sauerstoff, Stickstoff und ggf. weitere Komponenten aufweist, bereitgestellt wird. Anschließend wird das bereitgestellte Anfangs-Gasgemisch in einem Kompressorsystem geeignet komprimiert und dann dem Gasseparationssystem zugeführt, in welchem zumindest ein Teil des in dem komprimierten Anfangs-Gasgemisch enthaltenen Sauerstoffs abgetrennt wird, so dass am Ausgang des Gasseparationssystems ein mit Stickstoff angereichertes Gasgemisch bereitgestellt wird. Dieses am Ausgang des Gasseparationssystems bereitgestellte, mit Stickstoff angereicherte Gasgemisch wird anschließend in die Raumatmosphäre des umschlossenen Raums derart eingeleitet, dass ein vorgebbarer und im Vergleich zur normalen Umgebungsluft reduzierter Sauerstoffgehalt in der Raumatmosphäre des umschlossenen Raums eingestellt und/oder gehalten wird.

Erfindungsgemäß ist insbesondere vorgesehen, dass dann wenn die pro Zeiteinheit am Ausgang des Gasseparationssystems bereitzustellende Menge des mit Stickstoff angereicherten Gasgemisches erhöht werden muss, der Grad der durch das Kompressorsystem durchgeführten Komprimierung erhöht wird, insbesondere auf einen Wert, der von der pro Zeiteinheit bereitzustellenden Menge des mit Stickstoff angereichten Gasgemisches abhängt. Auf diese Weise kann der Betriebsmodus des Gasseparationssystems derart geändert werden, dass die pro Zeiteinheit am Ausgang des Gasseparationssystems tatsächlich bereitgestellte Menge des mit Stickstoff angereichten Gasgemisches der pro Zeiteinheit bereitzustellenden Menge des mit Stickstoff angereicherten Gasgemisches entspricht.

Die Erhöhung der durch das Kompressorsystem durchgeführten Komprimierung des Anfangs-Gasgemisches erfolgt insbesondere in einem Brandfall, d.h. dann, wenn beispielsweise in der Raumatmosphäre des umschlossenen Raumes eine Brandkenngröße detektiert wird, oder wenn aus einem anderen Grund kurzfristig der Sauerstoffgehalt in der Raumatmosphäre des umschlossenen Raumes im Vergleich zu dem zuvor eingestellten bzw. gehaltenen Sauerstoffgehalt weiter zu reduzieren ist.

Gemäß einem weiteren Aspekt der vorliegenden Erfindung ist vorgesehen, dass der Grad der durch das Kompressorsystem durchgeführten Komprimierung des Anfangs-Gasgemisches erhöht wird, wenn aufgrund eines erhöhten Luftwechsels die pro Zeiteinheit am Ausgang des Gasseparationssystems bereitzustellenden Menge des mit Stickstoff angereicherten Gasgemisches erhöht werden muss. Gemäß einem anderen Aspekt der vorliegenden Erfindung wird der Grad der durch das Kompressorsystem durchgeführten Komprimierung des Anfangs-Gasgemisches erhöht, denn aufgrund eines Ausfalls einer weiteren dem umschlossenen Raum zugeordneten Inertgasquelle, insbesondere bei Ausfall eines weiteren dem umschlossenen Raum zugeordneten Gasseparationssytems die pro Zeiteinheit am Ausgang des Gasseparationssystems bereitzustellenden Menge des mit Stickstoff angereicherten Gasgemisches erhöht werden muss.

Insbesondere wird in einem Brandfall oder wenn aus einem anderen Grund kurzfristig der Sauerstoffgehalt in der Raumatmosphäre des umschlossenen Raumes weiter zu reduzieren ist, der Grad der durch das Kompressorsystem durchgeführten Komprimierung des Anfangs-Gasgemisches auf einen Wert erhöht, der von der pro Zeiteinheit bereitzustellenden Menge des mit Stickstoff angereicherten Gasgemisches abhängt. In einer beispielhaften Ausführungsform ist es in diesem Zusammenhang denkbar, den Grad der durchgeführten Komprimierung von ursprünglich 1,5 bis 2,0 bar auf 7,0 bis 9,0 bar zu erhöhen. In anderen Ausführungsformen ist eine Erhöhung der Komprimierung auf bis zu 25,0 bar denkbar. Die Erfindung ist insbesondere nicht auf die zuvor angegebenen beispielhaften Werte beschränkt.

Der erfindungsgemäßen Lösung liegt die Erkenntnis zugrunde, dass ein Gasseparationssystem, welches in einem PSA-Betriebsmodus betrieben wird, pro Zeiteinheit eine hinreichend hohe Menge an mit Stickstoff angereichertes Gas bereitstellen kann, um im Bedarfsfall innerhalb kürzester Zeit eine Absenkung des Sauerstoffgehaltes in dem umschlossenen Raum von einem zuvor eingestellten Grundinertisierungsniveau auf ein Vollinertisierungsniveau realisieren zu können. Wenn andererseits das Gasseparationssystem in einem VPSA-Modus betrieben wird, ist die pro Zeiteinheit am Ausgang des Gasseparationssystems bereitstellbare Menge an mit Stickstoff angereichertem Gas deutlich geringer im Vergleich zu dem Fall, wenn das Gasseparationssystem im PSA-Modus läuft. Diese im VPSA-Modus pro Zeiteinheit am Ausgang des Gasseparationssystems bereitstellbare Menge an mit Stickstoff angereichertem Gas ist jedoch grundsätzlich ausreichend, um in dem umschlossenen Raum ein Grundinertisierungsniveau einstellen bzw. halten zu können.

Das bei der erfindungsgemäßen Lösung zum Einsatz kommende Gasseparationssystem erfüllt somit eine Doppelfunktion: wird das Gasseparationssystem im VPSA-Modus betrieben, so kommt diesem System die Funktion der bei den herkömmlichen Anlagen zum Einsatz kommenden ersten Inertgasquelle zu, mit der das zum Einstellen und/oder Halten eines Grundinertisierungsniveaus erforderliche Inertgas bereitgestellt wird. Im PSA-Betriebsmodus allerdings entspricht die Ausgabekapazität des Gasseparationssystems der eines Hochdruckgasspeicherbehälters, wie er bei herkömmlichen, zweistufig arbeitenden Inertisierungsanlagen als zweite Inertgasquelle zum Bereitstellen des Inertgases für die Vollinertisierung zum Einsatz kommt.

Um den Grad der durch das Kompressorsystem durchgeführten Komprimierung des Anfangs-Gasgemisches wahlweise erhöhen zu können, ist es denkbar, wenn das Kompressorsystem einen ersten Kompressor und mindestens einen zweiten Kompressor aufweist, wobei der zweite Kompressor wahlweise zu dem ersten Kompressor zugeschaltet wird, um die insgesamt erzielbare Komprimierung zu erhöhen. Insbesondere ist in diesem Zusammenhang denkbar, wenn der erste Kompressor und der zweite Kompressor unabhängig voneinander ansteuerbar sind, wobei der erste Kompressor in Reihe mit dem zweiten Kompressor derart geschaltet ist, dass durch Zuschalten des zweiten Kompressors der Grad der Komprimierung des Anfangs-Gasgemisches erhöht wird. Selbstverständlich sind aber auch andere Ausführungsformen zum wahlweisen Erhöhen des Komprimierungsgrades denkbar.

Bei Ausführungsformen des erfindungsgemäßen Inertisierungsverfahrens ist vorgesehen, dass im Bedarfsfall der Grad der von dem Kompressorsystem durchgeführten Komprimierung so lange vorzugsweise schrittweise erhöht wird, bis die am Ausgang des Gasseparationssystems pro Zeiteinheit bereitgestellte Menge des mit Stickstoff angereicherten Gasgemisches der pro Zeiteinheit bereitzustellenden Menge des mit Stickstoff angereicherten Gasgemisches entspricht. Bei dieser Ausführungsform ist somit eine Regelung vorgesehen, mit der sichergestellt ist, dass zu jedem Zeitpunkt von dem Gasseparationssystem exakt die Menge des mit Stickstoff angereicherten Gasgemisches bereitgestellt wird, die tatsächlich benötigt ist.

Gemäß einem Aspekt der vorliegenden Erfindung ist vorgesehen, dass das Kompressorsystem ausgelegt ist, das bereitgestellte Anfangs-Gasgemisch bedarfsweise auf unterschiedliche, vorzugsweise vorab festgelegte oder festlegbare Druckbereiche zu komprimieren. Hierbei ist es von Vorteil, wenn in Abhängigkeit von dem Grund bzw. der Ursache der erforderlichen Erhöhung der pro Zeiteinheit am Ausgang des Gasseparationssystems bereitzustellenden Menge des mit Stickstoff angereicherten Gasgemisches die Komprimierung des Anfangs-Gasgemisches vorzugsweise automatisch und noch bevorzugter wahlweise automatisch auf einen der vorab festgelegten oder festlegbaren Druckbereiche erfolgt.

Die erfindungsgemäße Lösung weist eine Reihe von Vorteilen gegenüber den herkömmlichen aus dem Stand der Technik bekannten zweistufigen Inertisierungsanlagen auf. Dadurch, dass sowohl für das Einstellen/Halten eines Grundinertisierungsniveaus als auch für das Einstellen/Halten eines Vollinertisierungsniveaus nur eine einzige Inertgasquelle in Gestalt eines im Betriebsmodus umschaltbaren Gasseparationssystems zum Einsatz kommt, sind die Anfangs-Investitionen für die Inertisierungsanlage im Vergleich zu den herkömmlichen Lösungen deutlich reduziert, da nicht mehr zwei separate Inertgasquellen zur Verfügung gestellt werden müssen. Aus den gleichen Gründen reduziert sich auch der Platzbedarf, da nach der erfindungsgemäßen Lösung zur Bereitstellung des mit Stickstoff angereicherten Gasgemisches anlagentechnisch lediglich ein Kompressorsystem und ein Gasseparationssystem vorzusehen sind.

Andererseits zeichnet sich die erfindungsgemäße Lösung insbesondere auch dadurch aus, dass das im Betriebsmodus umschaltbare Gasseparationssystem besonders energieeffizient und somit im Hinblick auf die laufenden Kosten günstig arbeitet. Das Gasseparationssystem ist insbesondere auch bei sehr begrenzten Raumverhältnissen leicht installierbar und arbeitet zuverlässig, automatisch und ohne Aufsicht vor Ort, was die erfindungsgemäße Lösung besonders anwenderfreundlich gestaltet. Die Energieeffizienz ist dadurch begründet, dass das Gasseparationssystem im VPSA-Modus hocheffizient mit nur geringen Energiekosten arbeitet, da das Kompressorsystem nur einen vergleichsweise geringen Grad an Komprimierung bereitstellen muss. Nur in einem Ausnahmefall, insbesondere in einem Brandfall oder wenn aus einem anderen Grund kurzfristig der Sauerstoffgehalt in der Raumatmosphäre des umschlossenen Raumes von dem zuvor eingestellten und gehaltenen Grundinertisierungsniveau weiter auf ein Vollinertisierungsniveau abgesenkt werden muss, wird von dem energieeffizienten VPSA-Betriebsmodus auf den PSA-Betriebsmodus umgeschaltet, bei dem die Leistung des Gasseparationssystems im Vergleich zum VPSA-Modus deutlich gesteigert ist.

In einer bevorzugten Realisierung der erfindungsgemäßen Lösung wird zum Bereitstellen des Anfangs-Gasgemisches in geregelter Weise dem umschlossenen Raum ein Teil der Raumluft entnommen, wobei diesem entnommenen Teil der Raumluft ebenfalls vorzugsweise in geregelter Weise Frischluft zugeführt wird. Zu diesem Zweck ist es bevorzugt, dem Kompressorsystem eine Mischkammer vorzuschalten, wobei in dieser Mischkammer die Frischluft dem entnommenen Teil der Raumluft zugeführt wird. Vorzugsweise wird dabei die Frischluft in geregelter Weise dem entnommenen Teil der Raumluft zugeführt.

"In geregelter Weise" bedeutet in diesem Zusammenhang, dass in der Mischkammer pro Zeiteinheit nur so viel Frischluft dem entnommenen Teil der Raumluft zugeführt wird, dass die pro Zeiteinheit am Ausgang des Gasseparationssystems bereitgestellte Menge an mit Stickstoff angereichertem Gas vorzugsweise der pro Zeiteinheit dem umschlossenen Raum entnommenen Menge an Raumluft entspricht. Damit kann erreicht werden, dass im umschlossenen Raum der Druck gleich bleibt und insbesondere keine Verluste durch Leckagen entstehen bzw. zu viel mit Stickstoff angereichertes Gas am Ausgang des Gasseparationssystems bereitgestellt und in den Raum eingeleitet wird, was im Hinblick auf die Energieeffizienz unvorteilhaft wäre.

Zur technischen Realisierung des bei der erfindungsgemäßen Lösung zum Einsatz kommenden Gasseparationssystems ist es denkbar, dass auf die Außenflächen von Hohlfasermembranen ein Separationsmaterial aufgebracht wird, durch welches Wasserdampf und Sauerstoff sehr gut diffundieren, wohingegen Stickstoff für dieses Separationsmaterial nur eine geringe Difffusionsgeschwindigkeit aufweist. Werden die derart präparierten Hohlfasern innen von dem Anfangs Gasgemisch durchströmt, diffundieren Wasserdampf und Sauerstoff sehr schnell durch die Hohlfaserwandung nach außen, während der Stickstoff weitgehend im Faserinneren gehalten wird, so dass während des Durchgangs durch die Hohlfaser eine starke Aufkonzentrierung des Stickstoffes stattfindet. Die Effektivität dieses Trennungsvorgangs ist im Wesentlichen von der Strömungsgeschwindigkeit in der Faser und der Druckdifferenz über die Hohlfaserwandung hinweg abhängig.

Im Hinblick auf das bei der erfindungsgemäßen Lösung zum Einsatz kommende Gasseparationssystem sind verschiedene Ausführungsformen denkbar. In einer besonders einfachen Realisierung ist das Gasseparationssystem als sogenanntes Einbett-System ausgeführt, bei dem das Gasseparationssystem einen einzigen Adsorberbehälter mit Adsorbermaterial aufweist. Bei dem Adsorbermaterial (gelegentlich auch "Adsorberbett" genannt) handelt es sich vorzugsweise um ein synthetisches Zeolith oder ein Kohlenstoff-Molekularsieb. Hierbei wird die allgemeine Erkenntnis ausgenutzt, dass verschiedene Gase unterschiedlich schnell durch Materialien diffundieren. Bei dem vorliegend vorgeschlagenen Gasseparationssystem werden im Einzelnen die unterschiedlichen Diffusionsgeschwindigkeiten der Hauptbestandteile des Anfangs-Gasgemisches, nämlich Stickstoff, Sauerstoff und ggf. Wasserdampf, technisch zur Erzeugung des mit Stickstoff angereicherten Gasgemisches genutzt.

Zur technischen Realisierung des bei der erfindungsgemäßen Lösung zum Einsatz kommenden Gasseparationssystems ist es denkbar, dass auf die Außenflächen von Hohlfasermembranen ein Separationsmaterial aufgebracht wird, durch welches Wasserdampf und Sauerstoff sehr gut diffundieren, wohingegen Stickstoff für dieses Separationsmaterial nur eine Diffusionsgeschwindigkeit aufweist. Werden die derart präparierten Hohlfasern innen von dem Anfangs-Gasgemisch durchströmt, diffundieren Wasserdampf und Sauerstoff sehr schnell durch die Hohlfaserwandung nach außen, während der Stickstoff weitgehend im Faserinneren gehalten wird, so dass während des Durchgangs durch die Hohlfaser eine starke Aufkonzentrierung des Stickstoffes stattfindet. Die Effektivität dieses Trennungsvorganges ist im Wesentlichen von der Strömungsgeschwindigkeit in der Faser und der Druckdifferenz über die Hohlfaserwandung hinweg abhängig.

Wie bereits erwähnt, ist in einer einfachen Realisierung der erfindungsgemäßen Lösung vorgesehen, dass das Gasseparationssystem als Einbett-System ausgeführt ist, wobei das Kompressorsystem mit dem Eingang des (einzigen) Adsorberbehälters verbindbar ist, um in einer Adsorptionsphase des Adsorberbehälters das komprimierte Anfangs-Gasgemisch dem Adsorberbehälter zuzuführen, so dass Sauerstoff aus dem Anfangs-Gasgemisch von dem Adsorbermaterial adsorbiert und an einem Ausgang des Adsorberbehälters das mit Stickstoff angereicherte Gasgemisch bereitgestellt wird, welches anschließend dem umschlossenen Raum zugeführt wird. In diesem Fall kann die Regenerierung des Adsorbermaterials durch Druckabsenkung auf den Umgebungsdruck erfolgen, so dass der bisher im Adsorbermaterial gebundene Sauerstoff an die Außenatmosphäre abgegeben wird. Da während der Regenerierung, d.h. während des Desorptionszyklus des Adsorbermaterials am Ausgang des Gasseparationssystems kein mit Stickstoff angereichertes Gas bereitgestellt wird, ist es von Vorteil, wenn bei einem als Einbett-System ausgeführten Gasseparationssystem zusätzlich ein NiederdruckPufferbehälter vorgesehen ist, der eine kontinuierliche Versorgung des umschlossenen Raumes mit dem mit Stickstoff angereicherten Gas gestattet.

Alternativ hierzu ist es allerdings auch denkbar, dass bei dem als Einbett-System ausgeführten Gasseparationssystem die Regenerierung des Adsorbermaterials mit Unterdruck erfolgt. In diesem Fall kommt zur Regenerierung ein Vakuumzyklus zum Einsatz, in dem zum Zwecke der Regenerierung eine Druckluftquelle mit dem Ausgang des Adsorberbehälters verbunden wird, um zumindest einen Teil des von dem Adsorbermaterials zuvor adsorbierten Sauerstoffes über den Eingang des Adsorberbehälters abzuführen und auf diese Weise das Adsorbermaterial zu regenerieren.

Um zu erreichen, dass der umschlossene Raum ohne ein NiederdruckPufferbehälter kontinuierlich mit dem mit Stickstoff angereicherten Gas (Inertgas) versorgt werden kann, ist in einer alternativen Ausführungsform der erfindungsgemäßen Lösung vorgesehen, dass das Gasseparationssystem als Zweibett-System ausgeführt ist. In diesem Fall weist das Gasseparationssystem einen ersten und einen zweiten Adsorberbehälter auf, die jeweils mit einem Adsorberbett bzw. Adsorbermaterial versehen sind. Zumindest im normalen Betrieb der Inertisierungsanlage, d.h. insbesondere wenn kein Brand im umschlossenen Raum ausgebrochen ist, werden die beiden Adsorberbehälter vorzugsweise derart gegenphasig betrieben, dass sich einer der beiden Adsorberbehälter in einer Adsorptionsphase befindet, während welcher das Adsorbermaterial des betreffenden Adsorberbehälters zumindest einen Teil des Sauerstoffes aus dem zugeführten Anfangs-Gasgemisch adsorbiert. Der andere der beiden Adsorberbehälter befindet sich dabei in einer Regenerationsphase, während welcher das Adsorbermaterial des anderen Adsorberbehälters regeneriert wird. Aufgrund der wechselweise aufeinanderfolgenden Verfahrensschritte adsorbiert immer einer der beiden Adsorberbehälter Sauerstoff, während der andere durch Desorption gereinigt wird. Auf diese Weise ist ein mit Stickstoff angereichertes Gas am Ausgang des Gasseparationssystems kontinuierlich bei nahezu gleichbleibendem Druck und mit nahezu gleichbleibender Reinheit verfügbar.

Wie bereits ausgeführt, ist es im Hinblick auf die Energieeffizienz und im Hinblick auf möglichst geringe laufende Betriebskosten von Vorteil, wenn das Gasseparationssystem normalerweise in einem VPSA-Modus betrieben wird, wobei nur in einem Brandfall oder wenn aus einem anderen Grund kurzfristig der Sauerstoffgehalt in der Raumatmosphäre des umschlossenen Raums im Vergleich zu dem zuvor eingestellten bzw. gehaltenen Sauerstoffgehalt weiter zu reduzieren ist, das Gasseparationssystem in einem PSA-Modus betrieben wird.

Denkbar hierbei ist insbesondere, dass im VPSA-Betriebsmodus des Gasseparationssystems das Kompressorsystem derart angesteuert wird, dass das Anfangs-Gasgemisch auf einen atmosphärischen Überdruck von 1,5 bis 2,0 bar komprimiert wird. Mit relativ geringem atmosphärischem Überdruck ist eine Gasseparation nach dem VPSA-Prinzip möglich. Wenn in diesem Fall das Gasseparationssystem als Zweibett-System ausgeführt ist, wird vorzugsweise ein Adsorptionszyklus und ein Desorptionszyklus verwendet, wobei durch die Druckwechseltechnik zwischen atmosphärischem Überdruck von 1,5 bis 2,0 bar und atmosphärischem Unterdruck (Vakuum) von etwa 0.2 bis 0,85 bar die beiden Adsorberbehälter abwechselnd im Adsorptions- bzw. Desorptionszyklus betrieben werden.

Um in einem Brandfall oder aus einem anderen Grund kurzfristig die pro Zeiteinheit am Ausgang des Gasseparationssystems bereitstellbare Menge an mit Stickstoff angereichertem Gas erhöhen zu können, wird das Gasseparationssystem umgeschaltet von dem VPSA-Betriebsmodus in den PSA-Betriebsmodus, und zwar indem am Eingang des Gasseparationssystems das Anfangs-Gasgemisch mit einem atmosphärischen Überdruck von 7,0 bis 9,0 bar bereitgestellt wird.

Selbstverständlich ist es aber auch denkbar, dass auch im PSA-Betriebsmodus des Gasseparationssystems zeitgleich einer der beiden Adsorberbehälter in einem Desorptionszyklus betrieben wird, während der andere der beiden Adsorberbehälter in einem Adsorptionszyklus betrieben wird.

Um die Effizienz des Gasseparationssystems zu optimieren, ist es von Vorteil, wenn dem Gasseparationssystem das Anfangs-Gasgemisch auf eine Temperatur von 10°C bis 30°C und noch bevorzugter auf eine Temperatur von 15°C bis 25°C temperiert zugeführt wird. Um die Temperierung des Anfangs-Gasgemisches in einer besonders energieeffizienten Weise realisieren zu können, ist in einer bevorzugten Weiterbildung der erfindungsgemäßen Lösung ein Wärmetauschersystem vorgesehen, welches zum Übertragen von zumindest einem Teil der in dem Gasseparationssystem und/oder Kompressorsystem beim Betrieb freigesetzten thermischen Energie (Verlustwärme) auf das Anfangs-Gasgemisch ausgelegt ist.

Zusätzlich oder alternativ hierzu ist in einer Weiterbildung der erfindungsgemäßen Lösung vorgesehen, dass auch das am Ausgang des Gasseparationssystems bereitgestellte und mit Stickstoff angereicherte Gasgemisch mit Hilfe von zumindest einem Teil der in dem Gasseparationssystem und/oder Kompressorsystem beim Betrieb freigesetzten thermischen Energie erwärmt wird. Hierzu ist es insbesondere denkbar, ein weiteres Wärmetauschersystem vorzusehen. Indem das am Ausgang des Gasseparationssystems bereitgestellte und mit Stickstoff angereicherte Gasgemisch vor dem Einleiten in die Raumatmosphäre des umschlossenen Raumes erwärmt wird, kann erreicht werden, dass sich das mit Stickstoff angereicherte Gasgemisch durch thermische Konvektion relativ zügig in der Raumatmosphäre des umschlossenen Raumes verteilt, so dass ein durchweg homogenes Absenkungsniveau realisierbar ist. Insbesondere ist es nicht erforderlich, dass das mit Stickstoff angereicherte Gasgemisch mit relativ hohem Druck in den umschlossenen Raum eingeleitet wird, um die Durchmischung in der Raumatmosphäre sicherzustellen. Das Einleiten von Gas mit hohem Druck ist aus energieeffizienter Hinsicht ungünstig und bringt unter Umständen andere Nachteile mit sich, insbesondere im Hinblick auf eine vorzusehende Druckentlastung.

Damit im Bedarfsfall ein Vollinertisierungsniveau in dem umschlossenen Raum noch schneller eingestellt werden kann, ist in einer bevorzugten Realisierung der erfindungsgemäßen Lösung zusätzlich zu dem Gasseparationssystem ein Katalysatorsystem vorgesehen. Dieses Katalysatorsystem ist ausgelegt, durch eine chemische Umwandlung eines Reduktors ein inertes Gasgemisch zu erzeugen. Denkbar hierbei ist es insbesondere, dass bedarfsweise zumindest ein Teil des am Ausgang des Gasseparationssystems bereitgestellten und mit Stickstoff angereicherten Gasgemisches und/oder ein Teil der in dem umschlossenen Raum enthaltenen Raumluft dem Katalysatorsystem zugeführt wird, um durch chemische Umwandlung eines Reduktors in dem Katalysatorsystems ein inertes Gasgemisch zu erzeugen, welches dann in die Raumatmosphäre des umschlossenen Raumes eingeleitet wird.

In einer bevorzugten Realisierung der zuletzt genannten Ausführungsform, bei welcher zusätzlich zu dem Gasseparationssystem ein Katalysatorsystem zum bedarfsweisen Erzeugen von Inertgas zum Einsatz kommt, wird als Reduktor, der im Katalysatorsystem chemisch umgewandelt wird, ein brennbarer Stoff, insbesondere ein brennbares Gas, vorzugsweise Kohlenstoffmonoxid verwendet.

Nachfolgend werden verschiedene Ausführungsbeispiele der erfindungsgemäßen Lösung anhand der beiliegenden Zeichnungen beschieben.

Es zeigen:
- Fig. 1: eine schematische Ansicht einer ersten exemplarischen Ausführungsform der erfindungsgemäßen Inertisierungsanlage;
- Fig. 2: eine schematische Ansicht einer zweiten exemplarischen Ausführungsform der erfindungsgemäßen Inertisierungsanlage;
- Fig. 3: eine schematische Ansicht einer dritten exemplarischen Ausführungsform der erfindungsgemäßen Inertisierungsanlage;
- Fig. 4: eine schematische Ansicht einer vierten exemplarischen Ausführungsform der erfindungsgemäßen Inertisierungsanlage; und
- Fig. 5: eine schematische Ansicht einer weiteren exemplarischen Ausführungsform der erfindungsgemäßen Inertisierungsanlage.

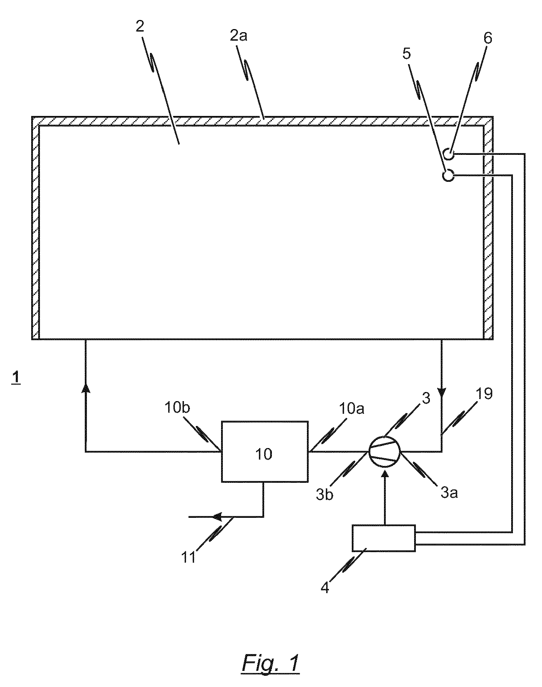

Fig. 1 zeigt in einer schematischen Darstellung eine erste beispielhafte Ausführungsform einer Inertisierungsanlage 1 gemäß der vorliegenden Erfindung. Die dargestellte Inertisierungsanlage 1 dient zum Einstellen und Halten eines vorgebbaren Absenkungsniveaus (Inertisierungsniveaus) in der Raumatmosphäre eines umschlossenen Raumes 2. Der umschlossene Raum 2 kann beispielsweise eine Lagerhalle sein, bei welcher beispielsweise als präventive Brandschutzmaßnahme der Sauerstoffgehalt in der Raumluft auf ein bestimmtes (Grund-)Inertisierungsniveau von beispielsweise 15 Vol.-% Sauerstoffgehalt abgesenkt und gehalten wird.

Die Inertisierungsanlage 1 in der in Fig. 1 dargestellten Ausführungsform weist ein Kompressorsystem 3 auf, dessen Eingang 3a strömungsmäßig derart mit dem umschlossenen Raum 2 verbunden ist, dass mit Hilfe des Kompressorsystems 3 Raumluft aus dem Inneren des umschlossenen Raumes 2 abgesaugt werden kann. Der Ausgang 3b des Kompressorsystems 3 ist strömungsmäßig mit einem Eingang 10a eines Gasseparationssystems 10 verbunden bzw. verbindbar. Auf diese Weise kann mit Hilfe des Kompressorsystems 3 dem Gasseparationssystem 10 die zuvor aus dem umschlossenen Raum 2 abgeführte Raumluft in komprimierter Weise zugeführt werden.

Selbstverständlich ist es auch denkbar, dass es sich bei dem dem Eingang 3a des Kompressorsystems 3 zugeführten Gasgemisch ausschließlich um Frischluft handelt, so dass auf eine Rückführungsleitung zwischen dem umschlossenen Raum 2 und dem Eingang 3a des Kompressorsystems 3 verzichtet werden kann. Insbesondere bei dieser Ausführungsform ist es von Vorteil, wenn in dem umschlossenen Raum 2 eine Druckentlastung, beispielsweise in Gestalt von einer oder mehreren Druckentlastungsklappen, vorgesehen ist.

Damit sich beim Abführen von Raumluft aus dem umschlossenen Raum 2 der Rauminnendruck nicht ändert, ist die Hülle 2a des umschlossenen Raumes 2 vorzugsweise mit (in Fig. 1 nicht dargestellten) Belüftungsöffnungen versehen. Hierbei kann es sich um natürlich auftretende Leckagen in der Raumhülle 2a oder aber auch um entsprechend eingebrachte Druckentlastungsöffnungen handeln.

Das in Fig. 1 nur schematisch dargestellte Gasseparationssystem 10 dient zum Bereitstellen eines mit Stickstoff angereicherten Gasgemisches am Ausgang 10b des Gasseparationssystems 10. Im Einzelnen ist das Gasseparationssystem 10 ausgelegt, von dem über das Kompressorsystem 3 in komprimierter Weise zugeführten Anfangs-Gasgemisch zumindest einen Teil des darin enthaltenen Sauerstoffs abzutrennen. Der von dem Anfangs-Gasgemisch abgetrennte Sauerstoff wird über eine Abgasleitung 11 an die Außenatmosphäre abgegeben.

Das am Ausgang 10b des Gasseparationssystems 10 bereitgestellte, mit Stickstoff angereicherte Gasgemisch wird anschließend in die Raumatmosphäre des umschlossenen Raumes 2 vorzugsweise in geregelter Weise derart eingeleitet, dass ein vorgebbarer und im Vergleich zur normalen Umgebungsluft reduzierter Sauerstoffgehalt in der Raumatmosphäre des umschlossenen Raumes 2 eingestellt und/oder gehalten wird.

Die entsprechend ansteuerbaren Komponenten der Inertisierungsanlage 1 werden bei der in Fig. 1 dargestellten schematischen Ausführungsform von einer Steuereinrichtung 4 geeignet angesteuert, so dass am Ausgang 10b des Gasseparationssystems 10 stets eine hinreichende Menge des mit Stickstoff angereicherten Gasgemisches bereitgestellt wird, um das vorgegebene Absenkungsniveau im umschlossenen Raum 2 einstellen bzw. halten zu können. Zu diesem Zweck ist auch eine Sauerstoffmesseinrichtung 5 vorgesehen, mit welcher kontinuierlich oder zu vorgegebenen Zeiten bzw. Ereignissen der aktuelle Sauerstoffgehalt in der Raumatmosphäre des umschlossenen Raumes 2 gemessen wird. Die entsprechenden Messwerte werden der Steuereinrichtung 4 zugeführt und dort mit entsprechenden Sollwerten verglichen. Überschreitet die in der Raumatmosphäre mit Hilfe der Sauerstoffmesseinrichtung 5 ermittelte Sauerstoffkonzentration den in der Steuereinrichtung 4 abgelegten Sollwert, schaltet die Steuereinrichtung 4 vorzugsweise automatisch und noch bevorzugter wahlweise automatisch das Kompressorsystem 3 ein, um das komprimierte Anfangs-Gasgemisch zu erzeugen. Auf diese Weise wird am Ausgang 10b des Gasseparationssystems 10 das mit Stickstoff angereichertem Gas bereitgestellt, so dass der Sauerstoffgehalt in der Raumatmosphäre entsprechend weiter abgesenkt werden kann, wenn das am Ausgang 10b des Gasseparationssystems 10 bereitgestellte und mit Stickstoff angereicherte Gasgemisch in die Raumatmosphäre eingeleitet wird.

Ergibt allerdings der in der Steuereinrichtung 4 durchgeführte Vergleich zwischen der gemessenen Sauerstoffkonzentration und dem Sollwert, dass der Sollwert bereits unterschritten ist, wird mit Hilfe der Steuereinrichtung 4 das Kompressorsystem ausgeschaltet, so dass kein mit Stickstoff angereichertes Gas mehr am Ausgang 10b des Gasseparationssystems 10 bereitgestellt wird. Während des normalen Betriebes der Inertisierungsanlage 1, d.h. wenn im umschlossenen Raum 2 ein Grundinertisierungsniveau einzustellen bzw. zu halten ist, wird dem Gasseparationssystem 10 das Anfangs-Gasgemisch mit einem atmosphärischen Druck von beispielsweise 1,5 bis 2,0 bar zugeführt. Dieser relativ geringe Eingangsdruck wird über das Kompressorsystem 3 erzeugt.

Wie in Fig. 1 dargestellt, ist die erfindungsgemäße Inertisierungsanlage 1 ferner mit einem vorzugsweise aspirativ arbeitenden Branderkennungssystem ausgerüstet, welches zumindest einen Brandkenngrößensensor 6 aufweist. Dieser Brandkenngrößensensor 6 ist bei der dargestellten Ausführungsform über eine Steuerleitung mit der Steuereinrichtung 4 verbunden. Mit Hilfe des Branderkennungssystems wird kontinuierlich oder zu vorgegebenen Zeiten bzw. Ereignissen überprüft, ob im Inneren des umschlossenen Raumes 2 ein Brand ausgebrochen ist. Bei Detektion einer Brandkenngröße gibt der Brandkenngrößensensor 6 ein entsprechendes Signal an die Steuereinrichtung 4 ab. Die Steuereinrichtung 4 initiiert anschließend vorzugsweise automatisch die vollständige Inertisierung des umschlossenen Raumes 2, wobei innerhalb kürzester Zeit und gemäß einer vorab festgelegten Inertisierungskurve der Sauerstoffgehalt in der Raumatmosphäre des umschlossenen Raumes 2 auf ein von der Brandlast des Raumes 2 abhängiges Vollinertisierungsniveau von beispielsweise 12 Vol.-% abgesenkt wird.

Die erfindungsgemäße Lösung zeichnet sich dadurch aus, dass bei der Inertisierungsanlage 1 lediglich eine einzige Inertgasquelle (hier: das Separationssystem 10 mit vorgeschaltetem Kompressorsystem 3) zum Einsatz kommt, wobei die Kapazität des Gasseparationssystems 10 bei Bedarf entsprechend erhöht werden kann, um innerhalb kürzester Zeit die für die Vollinertisierung erforderlich Menge an mit Stickstoff angereichertem Gas am Ausgang 10b des Gasseparationssystems 10 bereitstellen zu können.

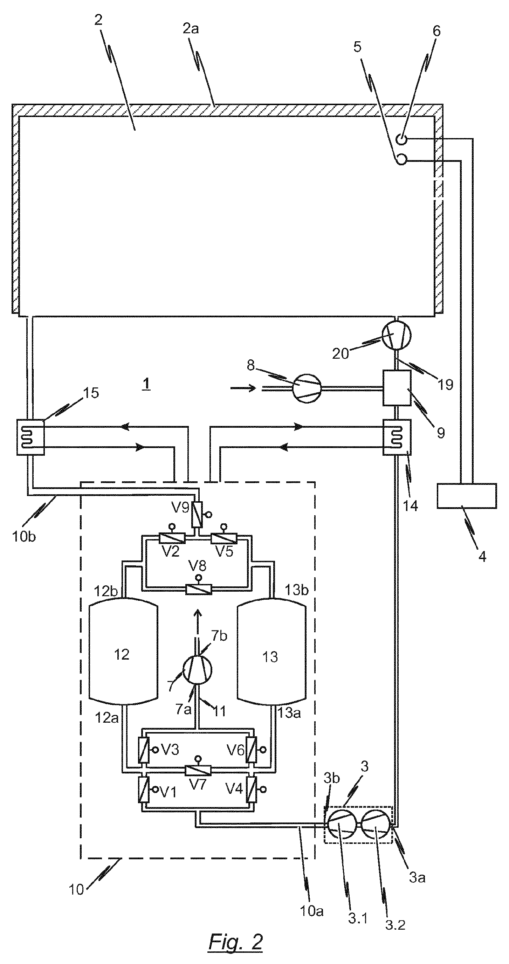

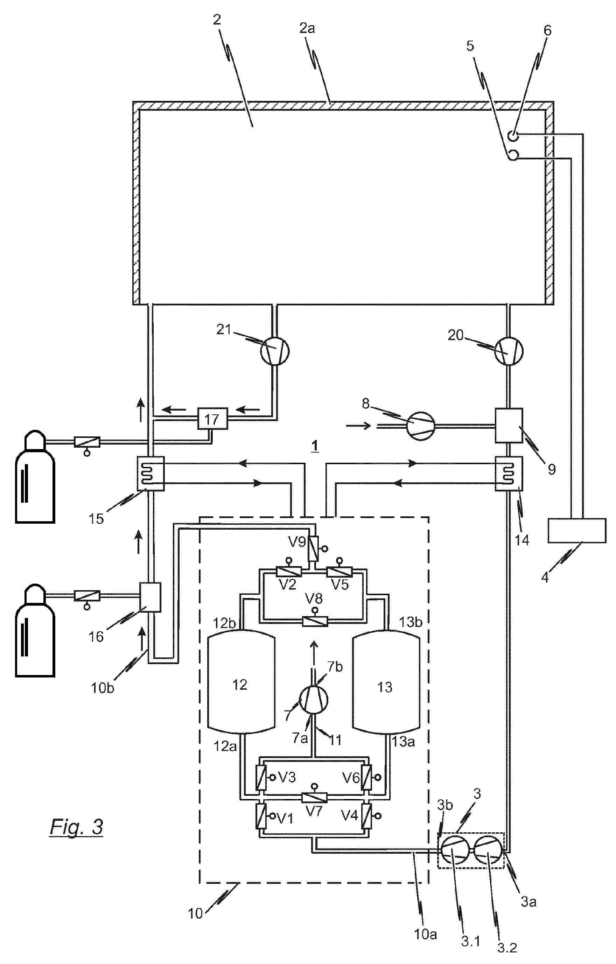

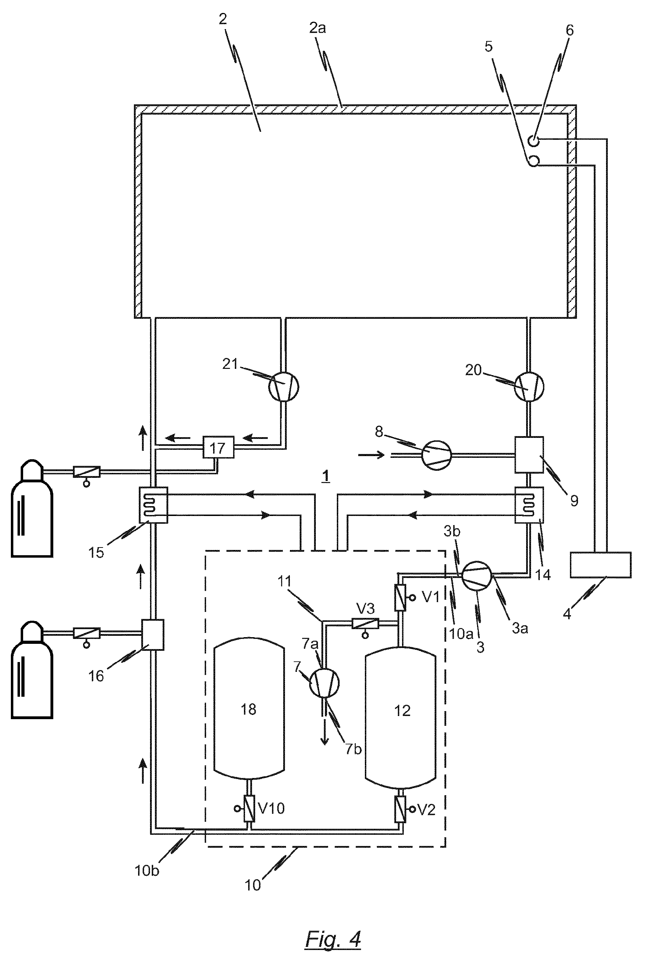

Wie es anschließend unter Bezugnahme auf die Darstellungen in den Figuren 2 bis 4 näher beschrieben wird, handelt es sich bei dem Gasseparationssystem 10 vorzugsweise um einen Ein-Bett-Stickstoffgenerator (vgl. Fig. 4) oder um einen Zwei-Bett-Stickstoffgenerator (vgl. Figuren 2 und 3), wobei diese Generatoren wahlweise in einem PSA-Modus oder in einem VPSA-Modus betrieben werden können. Beim PSA-Betriebsmodus wird dem Gasseparationssystem ein beispielsweise auf 7,0 bis 9,0 bar komprimiertes Anfangs-Gasgemisch zugeführt, infolgedessen die pro Zeiteinheit am Ausgang 10b des Gasseparationssystems 10 bereitstellbare Menge an mit Stickstoff angereichertem Gas deutlich erhöht ist im Vergleich zum VPSA-Betriebsmodus. Beim VPSA-Betriebsmodus liegt der Komprimierungsgrad des Anfangs-Gasgemisches lediglich bei beispielsweise 1,5 bis 2,0 bar.

In Fig. 2 ist in einer schematischen Ansicht eine exemplarische Ausführungsform der erfindungsgemäßen Inertisierungsanlage 1 gezeigt, bei welcher als Gasseparationssystem 10 ein Zwei-Bett-Stickstoffgenerator zum Einsatz kommt. Das ZweiBett-System zeichnet sich dadurch aus, dass ein erster und ein zweiter Adsorberbehälter 12, 13 vorgesehen sind, in denen sich jeweils ein Adsorberbett bzw. Adsorbermaterial befindet. Wird das Anfangs-Gasgemisch durch das Adsorbermaterial der Adsorberbehälter 12, 13 geleitet, adsorbiert das Adsorbermaterial zumindest einen Teil des in dem Anfangs-Gasgemisch enthaltenen Sauerstoffes, so dass am Ausgang 12b, 13b des jeweiligen Adsorberbehälters 12, 13 ein mit Stickstoff angereichertes Gasgemisch bereitgestellt wird.

Beim Zwei-Bett-System gemäß der in Fig. 2 dargestellten exemplarischen Ausführungsform sind die beiden Adsorberbehälter 12, 13 derart parallel zueinander angeordnet, dass diese gegenphasig betrieben werden können. Ein gegenphasiger Betrieb bedeutet, dass sich einer der beiden Adsorberbehälter 12, 13 in einer Adsorptionsphase befindet, in welcher das Adsorbermaterial des betroffenen Adsorberbehälters 12, 13 zumindest einen Teil des Sauerstoffs aus dem zugeführten Anfangs-Gasgemisch adsorbiert. Der andere der beiden Adsorberbehälter 13, 12 befindet sich dabei in einer Regenerationsphase, während welcher das Adsorbermaterial dieses anderen Adsorberbehälters 13, 12 regeneriert wird. Aufgrund der wechselweise aufeinanderfolgenden Verfahrensschritte adsorbiert einer der beiden Adsorberbehälter immer Sauerstoff, während der andere durch Desorption gereinigt wird. Auf diese Weise ist ein mit Stickstoff angereichertes Gas am Ausgang 10b des Gasseparationssystems 10 kontinuierlich bei nahezu gleichbleibendem Druck und mit nahezu gleichbleibender Reinheit verfügbar.

Im Einzelnen, und wie es dem Pneumatikdiagramm gemäß Fig. 2 entnommen werden kann, ist der Eingang 12a des ersten Adsorberbehälters 12 über ein Ventil V1 mit dem druckseitigen Ausgang 3b des Kompressorsystems 3 verbindbar, während der Ausgang 12b des ersten Adsorberbehälters 12 über ein Ventil V2 mit dem Ausgang 10b des Gasseparationssystems 10 verbindbar ist. In gleicher Weise ist der Eingang 13a des zweiten Adsorberbehälters 13 über ein Ventil V4 mit dem druckseitigen Ausgang 3b des Kompressorsystems 3 und der Ausgang 13b des zweiten Adsorberbehälters 13 über ein Ventil V5 mit dem Ausgang 10b des Gasseparationssystems verbindbar.

Ferner ist der Eingang 12a des ersten Adsorberbehälters 12 über ein Ventil V3 und der Eingang 13a des zweiten Adsorberbehälters 13 über ein Ventil V6 mit dem saugseitigen Eingang 7a einer Vakuumquelle 7 verbindbar.

Um den Grad der in dem Kompressorsystem 3 erzielbaren Komprimierung des Anfangs-Gasgemisches variieren zu können, ist es denkbar, als Kompressorsystem 3 einen frequenzgesteuerten Kompressor zu verwenden. Bei der in Fig. 2 dargestellten Ausführungsform hingegen setzt sich das Kompressorsystem 3 aus mehreren (hier zwei) Einzelkompressoren 3.1, 3.2 zusammen, die in Reihe geschaltet sind. Indem beide Kompressoren 3.1, 3.2 eingeschaltet sind, wird am Ausgang 3b des Kompressorsystems 3 das Anfangs-Gasgemisch in einer hoch komprimierten Form bereitgestellt, während der Grad der Komprimierung des Anfangs-Gasgemisches entsprechend reduziert ist, wenn nur einer der beiden Kompressoren 3.1, 3.2 eingeschaltet ist. Selbstverständlich ist es aber auch denkbar, mehrere Einzelkompressoren einzusetzen, die nicht in Reihe geschaltet sind, wobei durch Zuschalten von zusätzlichen Kompressoren der Grad der Komprimierung erhöht werden kann.

Darüber hinaus wurde bei der in Fig. 2 dargestellten Ausführungsform ein zusätzliches Gebläse 20 in der Rückführungsleitung 19 zwischen dem umschlossenen Raum 2 und dem Eingang 3a des Kompressorsystem 3 angebracht.

Im VPSA-Betriebsmodus des Gasseparationssystems 10 gemäß der in Fig. 2 dargestellten Ausführungsform der erfindungsgemäßen Inertisierungsanlage 1 wird einer der beiden Adsorberbehälter 12, 13 in einem Adsorptionszyklus betrieben, während gleichzeitig der andere der beiden Adsorberbehälter 13, 12 in einem Vakuumzyklus betrieben wird, um eine Regeneration des betreffenden Adsorbermaterials erreichen zu können. Im Adsorptionszyklus des ersten Adsorberbehälters 12 ist das Ventil V1 geöffnet, so dass der druckseitige Ausgang 3b des Kompressorsystems 3 in Fluidverbindung mit dem Eingang 12a des ersten Adsorberbehälters 12 steht. Das in dem Kompressorsystem 3 komprimierte Anfangs-Gasgemisch wird somit dem ersten Adsorberbehälter 12 zugeführt. Das am Ausgang 12b des ersten Adsorberbehälters 12 vorgesehene Ventil V2 ist im Adsorptionszyklus des ersten Adsorberbehälters 12 geöffnet, so dass am Ausgang 12b des ersten Adsorberbehälters 12 ein mit Stickstoff angereichertes Gasgemisch bereitgestellt wird.

Beim Betrieb des zweiten Adsorberbehälters 13 im Vakuumzyklus ist das am Ausgang 13b des zweiten Adsorberbehälters 13 vorgesehene Ventil V5 geschlossen. Ebenfalls ist das am Eingang 13a des zweiten Adsorberbehälters 13 vorgesehene Ventil V4 geschlossen, so dass der zweite Adsorberbehälter 13 nicht in Fluidverbindung mit dem druckseitigen Ausgang 13b des Kompressorsystems 3 steht. Allerdings ist das am Eingang 13a des zweiten Adsorberbehälters 13 vorgesehene Ventil V6 geöffnet und das am Eingang 12a des ersten Adsorberbehälters 12 vorgesehene Ventil V3 sowie das am Eingang 13a des zweiten Adsorberbehälters 13 vorgesehene Ventil V4 geschlossen.

Auf diese Weise ist der Eingang 13a des zweiten Adsorberbehälters 13 in Fluidverbindung mit dem saugseitigen Eingang 7a der Vakuumquelle 7, so dass zumindest ein Teil des von dem im zweiten Adsorberbehälter 13 aufgenommenen Adsorbermaterial adsorbierten Sauerstoffes desorbiert und aus dem zweite Adsorberbehälter mit Hilfe der Vakuumquelle 7 abgeführt und über den Ausgang 7b der Vakuumquelle 7 an die Umgebungsluft abgegeben wird.

Nach Regeneration des Adsorbermaterials des zweiten Adsorberbehälters 13 wird der zweite Adsorberbehälter 13 in einem Adsorptionszyklus betrieben, während der erste Adsorberbehälter 12 umgeschaltet wird in einen Desorptionszyklus. Zu diesem Zweck werden die Ventile V1, V2 und V6 geschlossen und die Ventile V3, V4 und V5 geöffnet. Dann durchströmt das im Kompressorsystem 3 komprimierte Anfangs-Gasgemisch das Adsorbermaterial des zweiten Adsorberbehälters 13, infolgedessen am Ausgang 13b des zweiten Adsorberbehälters 13 ein mit Stickstoff angereichertes Gas bereitgestellt wird. Andererseits wird der im ersten Adsorberbehälter zuvor adsorbierte Sauerstoff von der Vakuumquelle 7 zumindest teilweise abgesaugt und an die Außenluft abgegeben, so dass eine Regeneration des Adsorbermaterials des ersten Adsorberbehälters 12 stattfindet.

Insbesondere ist es von Vorteil, wenn der Eingang 12a des ersten Adsorberbehälters 12 über ein Ventil V7 direkt mit dem Eingang 13a des zweiten Adsorberbehälters 13 und der Ausgang 12b des ersten Adsorberbehälters 12 über ein Ventil V8 mit dem Ausgang 13b des zweiten Adsorberbeälters 13 strömungsmäßig verbunden werden kann. Durch das Vorsehen dieser Ventile V7, V8 ist es insbesondere möglich, vor dem Umschalten zwischen der Adsorbtionsphase und der Regenerationsphase die jeweiligen Eingänge 12a, 13a und gleichzeitig die jeweiligen Ausgänge 12b, 13b der beiden Adsorberbehälter 12, 13 für eine kurze Zeit (vorzugsweise 0,5 bis 2 Sekunden) kurzzuschließen. Auf diese Weise kann ein Druckausgleich zwischen den beiden Adsorberbehältern 12, 13 erfolgen, sodass bereits unmittelbar nach der Umschaltung zwischen der Adsorbtionsphase und der Regenerationsphase die Sauerstoffadsorbtion in dem sich in der Adsorbtionsphase befindenden Adsorberbehälter und die Regeneration des Adsorbermaterials in dem sich in der Regenerationsphase befindenden Adsorberbehälter 13, 12 beginnen kann. Durch diese Maßnahme ist die Effizienz des Separationssystems 10 optimiert.

Die einzelnen ansteuerbaren Komponenten der Inertisierungsanlage 1 gemäß Fig. 2 sind von der Steuereinrichtung 4 entsprechend ansteuerbar. Hierbei handelt es sich insbesondere um die Ventile V1 bis V9, das Kompressorsystem 3, die Vakuumquelle 7 und das Gebläse 20.

Wenn in einem Brandfall oder aus einem anderen Grund kurzfristig der Sauerstoffgehalt in der Raumatmosphäre des umschlossenen Raumes 2 im Vergleich zu einem zuvor eingestellten bzw. gehaltenen reduzierten Sauerstoffgehalt weiter reduziert werden muss, ist es erforderlich, dass am Ausgang 10b des Gasseparationssystems 10 pro Zeiteinheit eine größere Menge an mit Stickstoff angereichertem Gas zur Verfügung gestellt wird.

Um dies mit dem Gasseparationssystem 10 gemäß der Darstellung in Fig. 2 erzielen zu können, steuert die Steuereinrichtung 4 das Kompressorsystem 3 an, um den Grad der Komprimierung des Anfangs-Gasgemisches zu erhöhen. Hierbei ist zu berücksichtigen, dass bei dem zuvor beschriebenen VPSA-Betriebsmodus das Anfangs-Gasgemisch auf einen atmosphärischen Überdruck von beispielsweise 1,5 bis 2,0 bar komprimiert wird. Die Vakuumquelle 7 erzeugt einen Unterdruck von beispielsweise 0,2 bis 0,85 bar gegenüber Atmosphäre. Durch Steigerung des Kompressionsgrades des Kompressorsystems 3 auf einen atmosphärischen Überdruck von beispielsweise 7,0 bis 9,0 bar erhöht sich die pro Zeiteinheit durch die Adsorberbehälter 12, 13 geleitete Gasmenge, infolgedessen auch am Ausgang 10b des Gasseparationssystems 10 pro Zeiteinheit eine deutliche höhere Menge an mit Stickstoff angereichertem Gas bereitgestellt wird.

In dem PSA-Betriebsmodus, in welchem von dem Kompressorsystem 3 das Anfangs-Gasgemisch auf die als Beispiel genannten 7,0 bis 9,0 bar gegenüber Atmosphäre komprimiert wird, ist es grundsätzlich auch möglich, die beiden Adsorberbehälter 12, 13 wechselweise im Adsorptions- und Regenerationsmodus zu betreiben. Wenn im PSA-Betriebsmodus der erste Adsorberbehälter 12 im Adsorptionszyklus betrieben wird, sind die Ventile V1 und V2 geöffnet und das Ventil V3 geschlossen. Das auf den hohen atmosphärischen Überdruck komprimierte Anfangs-Gasgemisch durchströmt dann das Adsorbermaterial des ersten Adsorberbehälters 12, so dass am Ausgang 12b des ersten Adsorberbehälters 12 pro Zeiteinheit eine entsprechend hohe Menge an mit Stickstoff angereichertem Gas bereitgestellt wird.

Im Desorptionszyklus des zweiten Adsorberbehälters sind die Ventile V4 und V5 geschlossen und das Ventil V6 geöffnet. Des Weiteren ist die Vakuumquelle 7 ausgeschaltet, so dass der bisher im Adsorbermaterial gebundener Sauerstoff freigegeben und über den Eingang 13a des zweiten Adsorberbehälters 13 und das durchgeschaltete Ventil V6 zu dem Ausgang 7b der Vakuumquelle 7 gelangt, wo es an die Außenatmosphäre abgegeben wird.

Bei der in Fig. 2 dargestellten Ausführungsform der erfindungsgemäßen Inertisierungsanlage 1 ist vorgesehen, dass das Anfangs-Gasgemisch am saugseitigen Eingang 3a des Kompressorsystems 3 bereitgestellt wird, indem ein Teil der in dem umschlossenen Raum 2 enthaltenen Raumluft in geregelter Weise dem Raum 2 entnommen und dem entnommenen Teil der Raumluft in geregelter Weise Frischluft zugeführt wird.

Zu diesem Zweck ist ein Frischluftgebläse 8 vorgesehen, dessen Leistung von der Steuereinrichtung 4 einstellbar ist. Mit dem Frischluftgebläse 8 gelangt Frischluft in eine Mischkammer 9, in welcher die Frischluft mit Raumluft vermischt wird. Aus dieser Mischkammer 9 wird mit Hilfe des Kompressorsystems 3 das derart bereitgestellte Anfangs-Gasgemisch angesaugt.

Mit Hilfe der Steuereinrichtung 4 wird die Menge der Frischluft, die der dem Raum 2 entnommenen Raumluft zugemischt wird, so gewählt, dass die Menge der pro Zeiteinheit dem Raum 2 entnommenen Raumluft identisch ist mit der Menge des mit Stickstoff angereicherten Gasgemisches, welches in die Raumatmosphäre des Raumes 2 eingeleitet wird.

Bei der in Fig. 2 dargestellten Ausführungsform der erfindungsgemäßen Inertisierungsanlage 1 kommt ein erstes Wärmetauschersystem 14 zum Einsatz, um zumindest einen Teil der in dem Gasseparationssystem 10 und/oder in dem Kompressorsystem 3 beim Betrieb freigesetzten thermischen Energie auf das Anfangs-Gasgemisch zu übertragen. Im Einzelnen ist das erste Wärmetauschersystem 14 derart ausgebildet und dimensioniert, dass die Temperatur des Anfangs-Gasgemisches vorzugsweise auf 10 bis 30°C und noch bevorzugter auf 15 bis 25°C temperiert werden kann. Bei diesen Temperaturen arbeitet das Adsorbermaterial des Gasseparationssystems 10 am effektivsten.

Bei der in Fig. 2 dargestellten Ausführungsform der erfindungsgemäßen Inertisierungsanlage 1 kommt ferner ein zweites Wärmetauschersystem 15 zum Einsatz, welches dazu dient, zumindest einen Teil der in dem Gasseparationssystem 10 und/oder in dem Kompressorsystem 3 freigesetzten thermischen Energie auf das am Ausgang 10b des Gasseparationssystems 10 bereitgestellte und mit Stickstoff angereicherte Gasgemisch zu übertragen. Indem auf diese Weise in den umschlossenen Raum 2 ein vorgewärmtes und mit Stickstoff angereichertes Gasgemisch eingeleitet wird, kann in vorteilhafter Weise erreicht werden, dass sich dieses zugeführte und mit Stickstoff angereicherte Gasgemisch durch natürliche Konvektion im Inneren des Raumes 2 sehr gut und schnell vermischt. Insbesondere kann durch die Temperierung des zuzuführenden Gasgemisches auf eine Einleitung unter Druck verzichtet werden.

Die in Fig. 3 dargestellte Inertisierungsanlage 1 entspricht im Wesentlichen der zuvor unter Bezugnahme auf die Darstellung in Fig. 2 beschriebenen Anlage, wobei allerdings zusätzlich zu dem Gasseparationssystem 10 ein erstes Katalysatorsystem 16 zum Einsatz kommt. Das erste Katalysatorsystem 16 dient dazu, im Bedarfsfall aus dem am Ausgang 10b des Gasseparationssystems 10 bereitgestellten und mit Stickstoff bereits angereicherten Gasgemisch über eine chemische Umwandlung eines Reduktors ein inertes Gasgemisch zu erzeugen. Im Einzelnen wird in dem Katalysator durch chemische Umwandlung eines Reduktors, insbesondere eines brennbaren Stoffes, wie etwa Kohlenstoffmonoxid, das am Ausgang 10b des Gasseparationssystems 10 bereitgestellte und mit Stickstoff angereicherte Gasgemisch in ein inertes Gasgemisch umgewandelt.

Ein zweites Katalysatorsystem 17 ist bei der in Fig. 3 dargestellten Ausführungsform der Inertisierungsanlage 1 ebenfalls vorgesehen. Im Unterschied zu dem ersten Katalysatorsystem 16 wird dem zweiten Katalysatorsystem 17 direkt ein Teil der in dem umschlossenen Raum 2 enthaltenen Raumluft zugeführt, wobei zwischen dem umschlossenen Raum 2 und dem Katalysatorsystem 17 ein zusätzliches Gebläse 21 angebracht wurde, welches über die Steuereinrichtung 4 geregelt werden kann. Im Katalysatorsystem 17 wird durch eine chemische Umwandlung eines Reduktors, insbesondere Kohlenstoffmonoxid, ein inertes Gasgemisch erzeugt, welches anschließend in die Raumatmosphäre des umschlossenen Raumes 2 eingeleitet wird.

Die jeweiligen Katalysatorsysteme 16, 17 werden immer dann zugeschaltet, wenn die von dem Gasseparationssystem 10 pro Zeiteinheit bereitstellbare Menge an mit Stickstoff angereichertem Gas nicht ausreicht, um ein bestimmtes Absenkungsniveau in der Raumluftatmosphäre des umschlossenen Raumes (2) einzustellen und/oder zu halten.

Die in Fig. 4 dargestellte Inertisierungsanlage 1 entspricht im Wesentlichen der zuvor unter Bezugnahme auf die Darstellung in Fig. 3 beschriebenen Anlage, wobei allerdings als Gasseparationssystem 10 nun ein Ein-Bett-System zum Einsatz kommt. Mit anderen Worten, das Gasseparationssystem 10 der Inertisierungsanlage 1 gemäß Fig. 4 weist nur einen Adsorberbehälter 12 auf, welcher enigangsseitig über das Ventil V1 mit dem druckseitigen Ausgang 3b des Kompressorsystems 3 verbindbar ist. Über das Ventil V2 ist der Ausgang des Adsorberbehälters 12 mit dem Ausgang 10b des Gasseparationssystems 10 verbindbar. Des Weiteren ist am Eingang 12a des Adsorberbehälters 12 ein Ventil V3 vorgesehen, um den Eingang 12a des Adsorberbehälters 12 im Bedarfsfall mit der Saugseite einer Vakuumquelle 7 zu verbinden.

Wie auch bei den zuvor unter Bezugnahme auf die Darstellungen in den Figuren 2 und 3 beschriebenen Inertisierungsanlagen 1 ist bei der in Fig. 4 dargestellten Ausführungsform das Gasseparationssystem 10 in einem Adsorptionszyklus und in einem Regenerations- bzw. Vakuumzyklus betreibbar. Im Adsorptionszyklus sind hierbei die Ventile V1 und V2 geöffnet und das Ventil V3 geschlossen. Zum Regenerieren des Adsorbermaterials werden die Ventile V2 und V1 geschlossen, während das Ventil V3 geöffnet ist. Mit Hilfe der Vakuumquelle 7 wird dann der zuvor in dem Adsorbermaterial adsorbierte Sauerstoff aus dem Adsoberbehälter 12 entfernt.

Um die Ausgabekapazität des Gasseparationssystems 10 zu erhöhen, wird bei der in Fig. 4 dargestellten Ausführungsform mit Hilfe der Steuereinrichtung 4 der Grad der Kompression des Kompressorsystems 3 erhöht, beispielsweise von ursprünglich 1,5 bis 2,0 bar auf 7,0 bis 9,0 bar atmosphärischem Überdruck.

Um bei dem Ein-Bett-System gemäß Fig. 4 eine kontinuierliche Bereitstellung von mit Stickstoff angereichertem Gas zu ermöglichen, ist ein NiederdruckPufferbehälter 18 vorgesehen, welcher bedarfsweise über ein Ventil V9 mit dem Ausgang 12b des Adsorberbehälters 12 verbindbar ist, um den Niederdruckpufferbehälter 18 mit dem mit Stickstoff angereicherten Gas zu füllen. Im Bedarfsfall kann der Niederdruckpufferbehälter 18 über das Ventil V9 dieses mit Stickstoff angereicherte Gas dem Raum 2 zuführen, was beispielsweise dann erforderlich ist, wenn sich der Adsorberbehälter 12 im Regenerationszyklus befindet, oder wenn kurzfristig die pro Zeiteinheit in die Raumatmosphäre des umschlossenen Raumes 2 einzuführende Menge an mit Stickstoff angereichertem Gas erhöht werden muss.

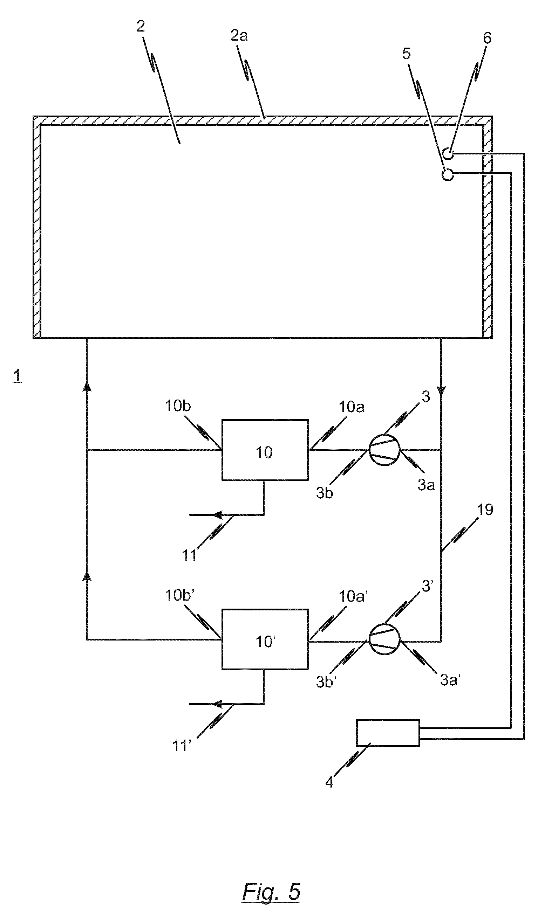

Nachfolgend wird unter Bezugnahme auf die schematische Darstellung in Fig. 5 eine weitere exemplarische Ausführungsform der erfindungsgemäßen Inertisierungsanlage 1 beschrieben.

Gemäß dieser weiteren Ausführungsform der vorliegenden Erfindung ist vorgesehen, dass der umschlossene Raum 2 mit einem ersten Gasseparationssystem 10 und mit mindestens einem weiteren Gasseparationssystem 10' ausgerüstet ist, wobei diese beiden Gasseparationssysteme 10, 10' jeweils so ausgebildet sind, wie die Gasseparationssysteme 10, welche bei den Ausführungsformen gemäß den Darstellungen in den Figuren 1 bis 4 zum Einsatz kommen. Insbesondere dienen die beiden Gasseparationssysteme 10, 10' jeweils zum Bereitstellen eines mit Stickstoff angereicherten Gasgemisches am entsprechenden Ausgang 10b, 10b' des jeweiligen Gasseparationssystems 10, 10'.

Bei der Ausführungsform gemäß Fig. 5 weist jedes der beiden Gasseparationssysteme 10, 10' ein eigenes Kompressorsystem 3, 3' auf, wobei diese beiden Kompressorsysteme 3, 3' unabhängig voneinander ansteuerbar sind. Jedes Kompressorsystem 3, 3' dient dazu, dem zugeordneten Gasseparationssystem 10, 10' ein Anfangs-Gasgemisch in komprimierter Weise zuzuführen. In dem jeweiligen Gasseparationssystem 10, 10' wird dann zumindest ein Teil des in dem zugeführten Anfangs-Gasgemisch enthaltenen Sauerstoffs abgetrennt. Der von dem Anfangs-Gasgemisch abgetrennte Sauerstoff wird über entsprechende Abgasleitungen 11, 11' an die Außenatmosphäre abgegeben.

Das an dem jeweiligen Ausgang 10b, 10b' der Gasseparationssysteme 10, 10' bereitgestellte, mit Stickstoff angereicherte Gasgemisch wird anschließend in die Raumatmosphäre des umschlossenen Raumes 2 vorzugsweise in geregelter Weise insbesondere derart eingeleitet, dass ein vorgebbarer und im Vergleich zur normalen Umgebungsluft reduzierter Sauerstoffgehalt in der Raumatmosphäre des umschlossenen Raumes 2 eingestellt und/oder gehalten wird.

Wie in Fig. 5 dargestellt, sind das Gasseparationssystem 10 sowie das mindestens eine weitere Gasseparationssystem 10' parallel zueinander geschaltet, wobei der jeweilige Ausgang 10b, 10b' strömungsmäßig mit dem umschlossenen Raum 2 verbunden bzw. verbindbar ist. Die bei der in Fig. 5 schematisch dargestellten Ausführungsform zum Einsatz kommenden Gasseparationssysteme 10, 10' sind jeweils ausgelegt, wahlweise in einem VPSA-Modus oder in einem PSA-Modus betrieben zu werden.

Auch ist bei der in Fig. 5 schematisch dargestellten Ausführungsform der erfindungsgemäßen Lösung eine Steuereinreichung 4 vorgesehen, welche ausgelegt ist, bedarfsweise mindestens eine Gasseparationssystem 10, 10' der dem umschlossenen Raum 2 zugeordneten Gasseparationssysteme 10, 10' derart anzusteuern, dass der Betriebsmodus des entsprechenden Gasseparationssystems 10, 10' von dem VPSA-Modus auf den PSA-Modus umgeschaltet wird. Dies erfolgt insbesondere dann, wenn festgestellt wird, dass in der Raumatmosphäre des umschlossenen Raumes 2 keine hinreichend homogene Durchmischung vorliegt.

Mit anderen Worten, wenn mit der Hilfe einer entsprechenden Sensorvorrichtung erfasst wird, dass sich in dem umschlossenen Raum eine Gasschichtung einstellt bzw. wenn festgestellt wird, dass eine nicht ausreichend homogene Durchmischung der Raumatmosphäre in dem umschlossenen Raum 2 vorliegt, wird seitens der Steuereinrichtung 4 mindestens eines der beiden Gasseparationssysteme 10, 10' derart angesteuert, dass dieses in den PSA-Modus umschaltet. Da in dem PSA-Modus das entsprechende Gasseparationssystem 10, 10' am entsprechenden Ausgang 10b, 10b' pro Zeiteinheit eine höhere Menge eines mit Stickstoff angereichten Gasgemisch bereitstellt, kann somit sichergestellt werden, dass eine stärkere Durchmischung in der Raumatmosphäre des umschlossenen Raumes 2 erfolgt.

Die Erfindung ist nicht auf die in den Zeichnungen dargestellten Ausführungsformen beschränkt, sondern ergibt sich aus einer Zusammenschau sämtlicher hierin offenbarter Merkmale.

Insbesondere ist es denkbar, dass der Anlage mehrere vorzugsweise unabhängig voneinander betreibbare Gasseparationssysteme zugeordnet sind. Die Steuereinrichtung 4 ist bei dieser Weiterbildung vorzugsweise derart ausgelegt, dass dann, wenn eines der Gasseparationssysteme ausfällt oder aus einem sonstigen Grund von einem der Gasseparationssysteme kein mit Stickstoff angereichtes Gasgemisch bereitgestellt werden kann oder die von einem der Gasseparationssysteme pro Zeiteinheit bereitstellbare Menge des mit Stickstoff angereicherten Gasgemisches unter einem Auslegungswert für das Gasseparationssystem liegt, mindestens eines der verbleibenden Gasseparationssysteme 10 von dem VPSA-Modus in den PSA-Modus umzuschalten. Die Umschaltung von dem VPSA-Modus in den PSA-Modus erfolgt vorzugsweise automatisch, sobald erfasst wird, dass von einem der Gasseparationssysteme die pro Zeiteinheit bereitstellbare Menge des mit Stickstoff angereicherten Gasgemisches unter einem Auslegungswert für dieses Gasseparationssystem liegt.

### Bezugszeichenliste

- 1: Inertisierungsanlage
- 2: umschlossener Raum
- 2a: Raumhülle
- 3, 3': Kompressorsystem
- 3a, 3a': Eingang des Kompressorsystems
- 3b, 3b': Ausgang des Kompressorsystems
- 4: Steuereinrichtung
- 5: Sauerstoffmesseinrichtung
- 6: Brandkenngrößensensor
- 7: Vakuumquelle
- 7a: Eingang der Vakuumquelle
- 7b: Ausgang der Vakuumquelle
- 8: Frischl uftgebläse
- 9: Mischkammer
- 10, 10': Gasseparationssystem
- 10a, 10a': Eingang des Gasseparationssystems
- 10b, 10b': Ausgang des Gasseparationssystems
- 11, 11': Abgasleitung
- 12: erster Adsorberbehälter
- 12a: Eingang des ersten Adsorberbehälters
- 12b: Ausgang des ersten Adsorberbehälters
- 13: zweiter Adsorberbehälter
- 13a: Eingang des zweiten Adsorberbehälters
- 13b: Ausgang des zweiten Adsorberbehälters
- 14: erstes Wärmetauschersystem
- 15: zweites Wärmetauschersystem
- 16: erstes Katalysatorsystem
- 17: zweites Katalysatorsystem
- 18: Niederdruckpufferbehälter
- 19: Rückführungsleitung
- 20: Gebläse
- 21: Gebläse
- V1 bis V9: Ventile

## Patentansprüche

1. Inertisierungsverfahren, bei welchem in der Raumatmosphäre eines umschlossenen Raumes (2) ein vorgebbarer und im Vergleich zur normalen Umgebungsluft reduzierter Sauerstoffgehalt eingestellt und gehalten wird, wobei das Verfahren die folgenden Verfahrensschritte aufweist:
i) Bereitstellen eines Anfangs-Gasgemisches, welches Sauerstoff, Stickstoff und ggf. weitere Komponenten aufweist;
ii) Komprimieren des bereitgestellten Anfangs-Gasgemisches in einem Kompressorsystem (3);
iii) Zuführen des komprimierten Anfangs-Gasgemisches zu einem Gasseparationssystem (10) und Abtrennen von zumindest einem Teil des in dem komprimierten Anfangs-Gasgemisch enthaltenen Sauerstoffs, um am Ausgang (10b) des Gasseparationssystems (10) ein mit Stickstoff angereichertes Gasgemisch bereitzustellen; und
iv) Einleiten von zumindest einem Teil des am Ausgang (10b) des Gasseparationssystems (10) bereitgestellten und mit Stickstoff angereicherten Gasgemisches in die Raumatmosphäre des umschlossenen Raumes (2) derart, dass der vorgebbare und im Vergleich zur normalen Umgebungsluft reduzierte Sauerstoffgehalt in der Raumatmosphäre des umschlossenen Raumes (2) eingestellt und/oder gehalten wird,
**dadurch gekennzeichnet, dass**
dann, wenn die pro Zeiteinheit am Ausgang (10b) des Gasseparationssystems (10) bereitzustellende Menge des mit Stickstoff angereicherten Gasgemisches erhöht werden muss, der Grad der im Verfahrensschritt ii) durchgeführten Komprimierung erhöht wird, insbesondere auf einen Wert, der von der pro Zeiteinheit bereitzustellenden Menge des mit Stickstoff angereicherten Gasgemisches abhängt, und
wobei dann, wenn die pro Zeiteinheit am Ausgang (10b) des Gasseparationssystems (10) bereitzustellende Menge des mit Stickstoff angereicherten Gasgemisches erhöht werden muss, das Gasseparationssystem (10) in einem PSA-Modus betrieben wird, und wobei ansonsten das Gasseparationssystem (10) in einem VPSA-Modus betrieben wird,
wobei der PSA-Modus einem Druckwechseladsorptions-Modus und der VPSA-Modus einem Vakuum-Druckwechseladsorptions-Modus entspricht.

2. Inertisierungsverfahren nach Anspruch 1
wobei das Gasseparationssystem (10) einen ersten und einen zweiten Adsorberbehälter (12, 13) jeweils mit Adsorbermaterial aufweist, wobei die Adsorberbehälter (12, 13) derart gegenphasig betrieben werden, dass sich einer der beiden Adsorberbehälter (12, 13) in einer Adsorptionsphase befindet, während welcher das Adsorbermaterial des Adsorberbehälters (12, 13) zumindest einen Teil des Sauerstoffs aus dem im Verfahrensschritt iii) zugeführten Anfangs-Gasgemisch adsorbiert, während sich der andere der beiden Adsorberbehälter (13, 12) in einer Regenerationsphase befindet, während welcher Sauerstoff aus dem Adsorbermaterial des anderen Adsorberbehälters (13, 12) desorbiert wird, wobei insbesondere vorgesehen ist, dass vor einem Umschalten zwischen der Adsorbtionsphase und der Regenerationsphase die jeweiligen Eingänge (12a, 13a) und die jeweiligen Ausgänge (12b, 13b) der Adsorberbehälter (12, 13) kurzzeitig strömungsmäßig kurzgeschlossen werden.

3. Inertisierungsverfahren nach Anspruch 1 oder 2,
wobei in einem Brandfall oder wenn aus einem anderen Grund kurzfristig der Sauerstoffgehalt in der Raumatmosphäre des umschlossenen Raumes (2) im Vergleich zu dem im Verfahrensschritt iv) eingestellten und/oder gehaltenen Sauerstoffgehalt weiter zu reduzieren ist, oder wenn aufgrund eines erhöhten Luftwechsels die pro Zeiteinheit am Ausgang (10b) des Gasseparationssystems (10) bereitzustellende Menge des mit Stickstoff angereicherten Gasgemisches erhöht werden muss, oder wenn aufgrund eines Ausfalls einer weiteren dem umschlossenen Raum (2) zugeordneten Inertgasquelle, insbesondere bei Ausfall eines weiteren dem umschlossenen Raum (2) zugeordneten Gasseparationssystems, der Grad der im Verfahrensschritt ii) durchgeführten Komprimierung erhöht wird; und/oder
wobei im Bedarfsfall der Grad der im Verfahrensschritt ii) durchgeführten Komprimierung so lange vorzugsweise schrittweise erhöht wird, bis die am Ausgang (10b) des Gasseparationssystems (10) pro Zeiteinheit bereitgestellte Menge des mit Stickstoff angereicherten Gasgemisches der pro Zeiteinheit bereitzustellenden Menge des mit Stickstoff angereicherten Gasgemisches entspricht; und/oder
wobei das Kompressorsystem (3) ausgelegt ist, im Verfahrensschritt ii) das bereitgestellte Anfangs-Gasgemisch bedarfsweise auf unterschiedliche, vorzugsweise vorab festgelegte oder festlegbare Druckbereiche zu komprimieren, wobei vorzugsweise in Abhängigkeit von dem Grund bzw. der Ursache der erforderlichen Erhöhung der pro Zeiteinheit am Ausgang (10b) des Gasseparationssystems (10) bereitzustellenden Menge des mit Stickstoff angereicherten Gasgemisches im Verfahrensschritt ii) die Komprimierung des Anfangs-Gasgemisches vorzugsweise automatisch und noch bevorzugter wahlweise automatisch auf einen der vorab festgelegten oder festlegbaren Druckbereiche erfolgt.

4. Inertisierungsverfahren nach einem der Ansprüche 1 bis 3,
wobei zum Bereitstellen des Anfangs-Gasgemisches im Verfahrensschritt i) ein Teil der in dem umschlossenen Raum (2) enthaltenen Raumluft in geregelter Weise dem Raum (2) entnommen und dem entnommenen Teil der Raumluft in geregelter Weise Frischluft zugeführt wird,
wobei die Menge der Frischluft, die der dem Raum (2) entnommenen Raumluft zugemischt wird, vorzugsweise so gewählt wird, dass die Menge der pro Zeiteinheit dem Raum (2) entnommenen Raumluft identisch ist mit der Menge des mit Stickstoff angereicherten Gasgemisches, welches im Verfahrensschritt iv) in die Raumatmosphäre des Raumes (2) eingeleitet wird.

5. Inertisierungsverfahren nach einem der Ansprüche 1 bis 4,
wobei das Gasseparationssystem (10) mindestens einen Adsorberbehälter (12, 13) mit Adsorbermaterial aufweist, wobei das Kompressorsystem (3) mit einem Eingang (12a, 13a) des Adsorberbehälters (12, 13) verbindbar ist, um in einer Adsorptionsphase des Adsorberbehälters (12, 13) das komprimierte Anfangs-Gasgemisch dem Adsorberbehälter (12, 13) zuzuführen, so dass Sauerstoff aus dem Anfangs-Gasgemisch von dem Adsorbermaterial adsorbiert und an einem Ausgang (12b, 13b) des Adsorberbehälters (12, 13) das mit Stickstoff angereicherte Gasgemisch bereitgestellt wird,
wobei vorzugsweise eine Vakuumquelle (7) mit dem Eingang (12a, 13a) des Adsorberbehälters (12, 13) oder eine Druckluftquelle mit dem Ausgang (12b, 13b) des Adsorberbehälters (12, 13) vorzugsweise wahlweise verbindbar ist, um in einer Regenerationsphase des Adsorberbehälters (12, 13) zumindest einen Teil des von dem Adsorbermaterial adsorbierten Sauerstoffes über den Eingang (12a, 13a) des Adsorberbehälters (12, 13) abzuführen und somit das Adsorbermaterial zu regenerieren.

6. Inertisierungsverfahren nach einem der Ansprüche 1 bis 5, wobei das Verfahren ferner die folgenden Verfahrensschritte aufweist:
- Zuführen eines komprimierten Anfangs-Gasgemisches zu einem weiteren Gasseparationssystem und Abtrennen von zumindest einem Teil des in dem komprimierten Anfangs-Gasgemisch enthaltenen Sauerstoffs, um am Ausgang des weiteren Gasseparationssystems ein mit Stickstoff angereichertes Gasgemisch bereitzustellen; und
- Einleiten von zumindest einem Teil des am Ausgang des weiteren Gasseparationssystems bereitgestellten und mit Stickstoff angereicherten Gasgemisches in die Raumatmosphäre des umschlossenen Raumes (2),
wobei dann, wenn das weitere Gasseparationssystem ausfällt oder aus einem sonstigen Grund am Ausgang des weiteren Gasseparationssystems kein mit Stickstoff angereichertes Gasgemisch bereitgestellt werden kann oder die am Ausgang des weiteren Gasseparationssystems pro Zeiteinheit bereitstellbare Menge des mit Stickstoff angereicherten Gasgemisches unter einem Auslegungswert für das weitere Gasseparationssystem liegt, das Gasseparationssystem (10) in einem PSA-Modus betrieben wird, und wobei ansonsten das Gasseparationssystem (10) in einem VPSA-Modus betrieben wird,
wobei die Umschaltung von dem VPSA-Modus in den PSA-Modus des Gasseparationssystems (10) vorzugsweise automatisch erfolgt, sobald erfasst wird, dass die am Ausgang des weiteren Gasseparationssystems pro Zeiteinheit bereitstellbare Menge des mit Stickstoff angereicherten Gasgemisches unter einem Auslegungswert für das weitere Gasseparationssystem liegt.

7. Inertisierungsverfahren nach einem der Ansprüche 1 bis 6,
wobei zumindest ein Teil der im Gasseparationssystem (10) und/oder im Kompressorsystem (3) freigesetzten thermischen Energie zum Aufwärmen des Anfangs-Gasgemisches verwendet wird, vorzugsweise derart dass das Anfangs-Gasgemisch eine Temperatur von 10° C bis 30° C, und noch bevorzugter von 15° C bis 25° C aufweist; und/oder
wobei zumindest ein Teil der im Gasseparationssystem (10) und/oder im Kompressorsystem (3) freigesetzten thermischen Energie zum Aufwärmen des am Ausgang (10b) des Gasseparationssystems (10) bereitgestellten, mit Stickstoff angereicherten Gasgemisches verwendet wird.

8. Inertisierungsverfahren nach einem der Ansprüche 1 bis 7,
wobei das Kompressorsystem (3) einen ersten Kompressor (3.1) und mindestens einen zweiten Kompressor (3.2) aufweist, wobei der Grad der im Verfahrensschritt ii) durchgeführten Komprimierung durch Zuschalten des zweiten Kompressors (3.2) zu dem ersten Kompressor (3.1) erhöht wird.

9. Inertisierungsverfahren nach einem der Ansprüche 1 bis 8,
wobei in einem Fall, wenn die pro Zeiteinheit bereitzustellende Menge des mit Stickstoff angereicherten Gasgemischs erhöht werden muss, zumindest ein Teil des im Verfahrensschritt iii) am Ausgang (10b) des Gasseparationssystems (10) bereitgestellten und mit Stickstoff angereicherten Gasgemisches und/oder ein Teil der in dem umschlossenen Raum (2) enthaltenen Raumluft einem Katalysator (16, 17) zugeführt wird, in welchem aus dem mit Stickstoff angereicherten Gasgemisch bzw. aus dem Teil der zugeführten Raumluft durch eine chemische Umwandlung eines Reduktors ein inertes Gasgemisch erzeugt wird, wobei das in dem Katalysator (16, 17) erzeugte inerte Gasgemisch anschließend in die Raumatmosphäre des umschlossenen Raumes (2) eingeleitet wird, wobei der Reduktor vorzugsweise ein brennbarer Stoff, insbesondere ein brennbares Gas, vorzugsweise Kohlenstoffmonoxid, ist.

10. Anlage (1), bei welcher in der Raumatmosphäre eines umschlossenen Raumes (2) ein vorgebbarer und im Vergleich zur normalen Umgebungsluft reduzierter Sauerstoffgehalt eingestellt und gehalten wird, wobei die Anlage (1) ein Kompressorsystem (3) zum Komprimieren eines Anfangs-Gasgemisches und ein mit dem Kompressorsystem (3) verbundenes Gasseparationssystem (10) aufweist, in welchem zumindest ein Teil des in dem komprimierten Anfangs-Gasgemisches enthaltenen Sauerstoffs abgetrennt wird,
**dadurch gekennzeichnet, dass** das Gasseparationssystem (10) ausgelegt ist, wahlweise in einem VPSA-Modus oder in einem PSA-Modus betrieben zu werden,
wobei vorzugsweise eine Steuereinrichtung (4) vorgesehen ist, welche ausgelegt ist, in einem Fall wenn die pro Zeiteinheit am Ausgang (10b) des Gasseparationssystems (10) bereitzustellende Menge eines mit Stickstoff angereicherten Gasgemisches erhöht werden muss, wahlweise automatisch das Gasseparationssystem (10) von dem VPSA-Modus auf den PSA-Modus umzuschalten,
wobei das Verdichtungsverhältnis des Kompressorsystems (3) vorzugsweise einstellbar ist derart, dass das Anfangs-Gasgemisch im Kompressorsystem (3) wahlweise auf einen ersten niedrigen Druckwert oder einen zweiten, hohen Druckwert, insbesondere auf einen Druck von 1,5 bis 2,0 bar oder 7,0 bis 9,0 bar, komprimierbar ist, und wobei die Steuereinrichtung (4) ausgelegt ist, in einem Fall, wenn die pro Zeiteinheit bereitzustellende Menge des mit Stickstoff angereicherten Gasgemischs erhöht werden muss, wahlweise automatisch das Kompressorsystem (3) so anzusteuern, dass das Anfangs-Gasgemisch im Kompressorsystem (3) auf den zweiten, hohen Druckwert komprimiert wird,
wobei das Kompressorsystem vorzugsweise einen ersten Kompressor (3.1) und mindestens einen unabhängig von dem ersten Kompressor (3.1) ansteuerbaren zweiten Kompressor (3.2) aufweist, wobei der erste und zweite Kompressor (3.1, 3.2) derart ausgebildet sind, dass durch Zuschalten des zweiten Kompressors (3.2) der Grad der Komprimierung des Anfangs-Gasgemisches erhöht wird,
wobei der PSA-Modus einem Druckwechseladsorptions-Modus und der VPSA-Modus einem Vakuum-Druckwechseladsorptions-Modus entspricht.

11. Anlage (1) nach Anspruch 10,
wobei die Anlage (1) mindestens ein weiteres Gasseparationssystem zum Bereitstellen eines mit Stickstoff angereicherten Gasgemisches aufweist, und wobei die Steuereinrichtung (4) ausgelegt ist, dann, wenn das weitere Gasseparationssystem ausfällt oder aus einem sonstigen Grund von dem weiteren Gasseparationssystem kein mit Stickstoff angereichertes Gasgemisch bereitgestellt werden kann oder die von dem weiteren Gasseparationssystem pro Zeiteinheit bereitstellbare Menge des mit Stickstoff angereicherten Gasgemisches unter einem Auslegungswert für das weitere Gasseparationssystem liegt, das Gasseparationssystem (10) von dem VPSA-Modus in den PSA-Modus umzuschalten, wobei wobei die Umschaltung von dem VPSA-Modus in den PSA-Modus vorzugsweise automatisch erfolgt, sobald erfasst wird, dass die von dem weiteren Gasseparationssystem pro Zeiteinheit bereitstellbare Menge des mit Stickstoff angereicherten Gasgemisches unter einem Auslegungswert für das weitere Gasseparationssystem liegt.

12. Anlage (1) nach Anspruch 10 oder 11,
wobei das Gasseparationssystem (10) folgendes aufweist:
- einen mit einem Ausgang (3b) des Kompressorsystems (3) verbundenen oder verbindbaren Eingang (10a) zum Zuführen des komprimierten Anfangs-Gasgemisches;
- einen ersten mit dem umschlossenen Raum (2) verbundenen oder verbindbaren Ausgang (10b) zum Zuführen eines mit Stickstoff angereicherten Gasgemisches in die Raumatmosphäre des umschlossenen Raumes (2);
- einen zweiten Ausgang (11) zum Abführen eines mit Sauerstoff angereicherten Gasgemisches aus dem Gasseparationssystem (10); und
- mindestens einen ersten und einen zweiten Adsorberbehälter (12, 13), welche jeweils ein Adsorbermaterial aufweisen,
wobei der erste und der zweite Adsorberbehälter (12, 13) jeweils über ein Ventilsystem (V1-V9) unabhängig von einander mit dem Eingang (10a), dem ersten Ausgang (10b) und/oder dem zweiten Ausgang (11) des Gasseparationssystems (10) verbindbar sind, und wobei der zweite Ausgang (11) des Gasseparationssystems (10) wahlweise mit der Saugseite (7a) einer Vakuumquelle (7) verbindbar ist,
wobei vorzugsweise eine Steuereinrichtung (4) vorgesehen ist, welche ausgelegt ist, wahlweise automatisch den zweiten Ausgang (11) des Gasseparationssystems (10) mit der Saugseite (7a) der Vakuumquelle (7) zu verbinden, wenn das Gasseparationssystem (10) in dem VPSA-Modus betrieben wird.

13. Anlage (1) nach einem der Ansprüche 10 bis 12,
wobei ferner ein Wärmetauschersystem (14) vorgesehen ist zum Übertragen von zumindest einem Teil der in dem Gasseparationssystem (10) und/oder in dem Kompressorsystem (3) freigesetzten thermischen Energie auf das Anfangs-Gasgemisch, um das Anfangs-Gasgemisch auf eine Temperatur von vorzugsweise 10° C bis 30° C, und noch bevorzugter von 15° C bis 25° C aufzuwärmen; und/oder
wobei ferner ein Wärmetauschersystem (15) vorgesehen ist zum Übertragen von zumindest einem Teil der in dem Gasseparationssystem (10) und/oder in dem Kompressorsystem (3) freigesetzten thermischen Energie auf das am Ausgang (10b) des Gasseparationssystems (10) bereitgestellten und mit Stickstoff angereicherten Gasgemisch; und/oder
wobei ferner ein Katalysatorsystem (16, 17) vorgesehen ist, dem bedarfsweise zumindest ein Teil des am Ausgang (10b) des Gasseparationssystems (10) bereitgestellten und mit Stickstoff angereicherten Gasgemisches und/oder ein Teil der in dem umschlossenen Raum (2) enthaltenen Raumluft zuführbar ist, um durch eine chemische Umwandlung eines Reduktors ein inertes Gasgemisch zu erzeugen, wobei der Ausgang des Katalysatorsystems (16, 17) mit dem umschlossenen Raum (2) verbunden oder verbindbar ist zum Einleiten des in dem Katalysatorsystem (16, 17) erzeugten inerten Gasgemisches in die Raumatmsphäre des umschlossenen Raumes (2).

## Claims

1. Inerting method in which an oxygen content which is predefinable and reduced in comparison to normal ambient air is set and maintained in the spatial atmosphere of an enclosed room (2), wherein the method comprises the following method steps:
i) providing an initial gas mixture of oxygen, nitrogen and further elements as applicable;
ii) compressing the initial gas mixture provided in a compressor system (3);
iii) feeding the compressed initial gas mixture to a gas separation system (10) and separating at least a portion of the oxygen contained in the compressed initial gas mixture so as to provide a nitrogen-enriched gas mixture at the outlet (10b) of the gas separation system (10); and
iv) introducing at least part of the nitrogen-enriched gas mixture provided at the outlet (10b) of the gas separation system (10) into the spatial atmosphere of the enclosed room (2) so as to set and/or maintain an oxygen content in the spatial atmosphere of the enclosed room (2) which is predefinable and reduced in comparison to normal ambient air,
**characterized in that**
the degree of compression realized in method step ii) is increased, particularly to a value dependent on the amount of nitrogen-enriched gas mixture to be provided per unit of time, when the amount of nitrogen-enriched gas mixture to be provided per unit of time at the outlet (10b) of the gas separation system (10) needs to be increased, and
wherein the gas separation system (10) is operated in PSA mode when the amount of nitrogen-enriched gas mixture to be supplied per unit of time at the outlet (10b) of the gas separation system (10) needs to be increased, and wherein the gas separation system (10) is otherwise operated in VPSA mode,
wherein the PSA mode corresponds to a pressure swing adsorption mode and the VPSA mode to a vacuum pressure swing adsorption mode.

2. The inerting method according to claim 1,
wherein the gas separation system (10) comprises a first and a second adsorber vessel (12, 13) each comprising adsorber material, wherein the adsorber vessels (12, 13) operate in phase opposition such that one of the two adsorber vessels (12, 13) is in an adsorption phase during which the adsorber material of the adsorber vessel (12, 13) adsorbs at least part of the oxygen from the initial gas mixture supplied in method step iii) while the other of the two adsorber vessels (13, 12) is in a regeneration phase during which oxygen is desorbed from the adsorber material of the other adsorber vessel (13, 12), wherein it is particularly provided for the respective inlets (12a, 13a) and the respective outlets (12b, 13b) of the adsorber vessels (12, 13) to be briefly fluidly connectively coupled prior to switching between the adsorption phase and the regeneration phase.

3. The inerting method according to claim 1 or 2,
wherein when the oxygen content in the spatial atmosphere of the enclosed room (2) is to be quickly reduced further compared to the oxygen content set and/or maintained in method step iv) in the event of a fire for another reason, or when the amount of nitrogen-enriched gas mixture to be provided per unit of time at the outlet (10b) of the gas separation system (10) needs to be increased due to increased air exchange, or when the degree of compression realized in method step ii) is to be increased due to a loss of a further insert gas source allocated to the enclosed room (2), particularly a loss of a further gas separation system allocated to the enclosed room (2); and/or
wherein the degree of compression realized in method step ii) is preferably progressively increased when needed until the amount of nitrogen-enriched gas mixture provided at the outlet (10b) of the gas separation system (10) per unit of time corresponds to the amount of nitrogen-enriched gas mixture to be supplied per unit of time; and/or
wherein the compressor system (3) is designed to compress as needed the supplied initial gas mixture to different, preferably predefined or predefinable pressure ranges in method step ii), wherein the initial gas mixture is preferably compressed in method step ii) automatically, and even more preferably, selectively automatically, to one of the predefined or predefinable pressure ranges in method step ii) preferably as a function of the reason and/or the cause of the needed increase in the nitrogen-enriched gas mixture to be supplied per unit of time at the outlet (10b) of the gas separation system (10).

4. The inerting method according to any one of claims 1 to 3,
wherein to supply the initial gas mixture in method step i), a portion of the ambient air within the enclosed room (2) is extracted from the room (2) in regulated manner and fresh air is fed in regulated manner to the extracted portion of the room air,
wherein the amount of fresh air to be added to the ambient air extracted from the room (2) is preferably selected such that the amount of ambient air extracted from the room (2) per unit of time is identical to the amount of the nitrogen-enriched gas mixture introduced into the spatial atmosphere of the room (2) in method step iv).

5. The inerting method according to any one of claims 1 to 4,
wherein the gas separation system (10) comprises at least one adsorber vessel (12, 13) containing adsorber material, wherein the compressor system (3) is connectable to an inlet (12a, 13a) of the adsorber vessel (12, 13) so as to supply the compressed initial gas mixture to the adsorber vessel (12, 13) in an adsorption phase of said adsorber vessel (12, 13) such that the adsorber material adsorbs oxygen from the initial gas mixture and the nitrogen-enriched gas mixture is provided at an outlet (12b, 13b) of the adsorber vessel (12, 13),
wherein a vacuum source (7) is preferably selectively connectable to the inlet (12a, 13a) of the adsorber vessel (12, 13) or a compressed air source preferably selectively connectable to the outlet (12b, 13b) of the adsorber vessel (12, 13) so as to purge at least part of the oxygen adsorbed by the adsorber material via the inlet (12a, 13a) of the adsorber vessel (12, 13) in a regeneration phase of the adsorber vessel (12, 13) and thus regenerate the adsorber material.

6. The inerting method according to any one of claims 1 to 5, wherein the method further comprises the following method steps:
- feeding a compressed initial gas mixture to a further gas separation system and separating at least a portion of the oxygen contained in the compressed initial gas mixture so as to provide a nitrogen-enriched gas mixture at the outlet of the further gas separation system; and
- introducing at least part of the nitrogen-enriched gas mixture provided at the outlet of the further gas separation system into the spatial atmosphere of the enclosed room (2),
wherein the gas separation system (10) is operated in PSA mode when the further gas separation system fails or when for some other reason no nitrogen-enriched gas mixture can be provided at the outlet of the further gas separation system or the amount of the nitrogen-enriched gas mixture able to be supplied at the outlet of the further gas separation system per unit of time is below a design value for said further gas separation system, and wherein the gas separation system (10) is otherwise operated in VPSA mode,
wherein the switching of the gas separation system (10) from VPSA mode to PSA mode preferably occurs automatically as soon as it is determined that the amount of the nitrogen-enriched gas mixture able to be supplied per unit of time at the outlet of the further gas separation system is below a design value for said further gas separation system.

7. The inerting method according to any one of claims 1 to 6,
wherein at least a portion of the thermal energy released in the gas separation system (10) and/or in the compressor system (3) is used to warm the initial gas mixture, preferably such that the initial gas mixture has a temperature of 10° C to 30° C, and even more preferentially 15° C to 25° C; and/or
wherein at least a portion of the thermal energy released in the gas separation system (10) and/or in the compressor system (3) is used to warm the nitrogen-enriched gas mixture provided at the outlet (10b) of the gas separation system (10).

8. The inerting method according to any one of claims 1 to 7,
wherein the compressor system (3) comprises a first compressor (3.1) and at least one second compressor (3.2), wherein connecting the second compressor (3.2) to the first compressor (3.1) increases the degree of compression realized in method step ii).

9. The inerting method according to any one of claims 1 to 8,
wherein in the event the amount of the nitrogen-enriched gas mixture to be provided per unit of time needs to be increased, at least part of the gas mixture provided in method step iii) at the outlet (10b) of the gas separation system (10) and enriched with nitrogen and/or a portion of the ambient air contained within the enclosed room (2) is fed to a catalyzer (16, 17) in which an inert gas mixture is produced from the nitrogen-enriched gas mixture or respectively from the portion of supplied room air through a chemical conversion of a reductant, wherein the inert gas mixture produced in the catalyzer (16, 17) is thereafter introduced into the spatial atmosphere of the enclosed room (2), wherein the reductant is preferably a flammable substance, particularly a combustible gas, preferably carbon monoxide.

10. A system (1) in which an oxygen content which is predefinable and reduced in comparison to normal ambient air is set and maintained in the spatial atmosphere of an enclosed room (2), wherein the system (1) comprises a compressor system (3) for compressing an initial gas mixture and a gas separation system (10) connected to the compressor system (3) in which at least part of the oxygen contained within the compressed initial gas mixture is separated,
**characterized in that**
the gas separation system (10) is designed to be selectively operated in either a VPSA mode or a PSA mode,
wherein a control unit (4) is preferably provided which is designed to selectively automatically switch the gas separation system (10) from VPSA mode to PSA mode when the amount of the nitrogen-enriched gas mixture provided per unit of time at the outlet (10b) of the gas separation system (10) needs to be increased,
wherein the compression ratio of the compressor system (3) is preferably adjustable such that the initial gas mixture can be selectively compressed in the compressor system (3) to a first low pressure value or a second high pressure value, particularly to a pressure of 1.5 to 2.0 bar or 7.0 to 9.0 bar, and wherein the control unit (4) is designed to preferably selectively automatically actuate the compressor system (3) such that the initial gas mixture is compressed to the second, high pressure value in the compressor system (3) when the volume of the nitrogen-enriched gas mixture provided per unit of time needs to be increased,
wherein the compressor system preferably comprises a first compressor (3.1) and at least one second compressor (3.2) independently controllable from said first compressor (3.1), wherein the first and second compressor (3.1, 3.2) are designed such that the degree of compression of the initial gas mixture is increased by the connecting of said second compressor (3.2),
wherein the PSA mode corresponds to a pressure swing adsorption mode and the VPSA mode to a vacuum pressure swing adsorption mode.

11. The system (1) according to claim 10,
wherein the system (1) comprises at least one further gas separation system to provide a nitrogen-enriched gas mixture, and wherein the control unit (4) is designed to switch the gas separation system (10) from VPSA mode into PSA mode when the further gas separation system fails or when for some other reason no nitrogen-enriched gas mixture can be provided by the further gas separation system or the amount of nitrogen-enriched gas mixture able to be supplied per unit of time by the further gas separation system is below a design value for said further gas separation system, wherein the switching from VPSA mode to PSA mode preferably occurs automatically as soon as it is determined that the amount of the nitrogen-enriched gas mixture able to be supplied per unit of time by the further gas separation system is below a design value for said further gas separation system.

12. The system (1) according to claim 10 or 11,
wherein the gas separation system (10) comprises the following:
- an inlet (10a) connected or connectable to an outlet (3b) of the compressor system (3) for supplying the compressed initial gas mixture;
- a first outlet (10b) connected or connectable to the enclosed room (2) for supplying a nitrogen-enriched gas mixture into the spatial atmosphere of the enclosed room (2);
- a second outlet (11) for purging an oxygen-enriched gas mixture from the gas separation system (10); and
- at least one first and one second adsorber vessel (12, 13), each containing an adsorber material,
wherein the first and the second adsorber vessel (12, 13) are respectively connectable to the inlet (10a), the first outlet (10b) and/or the second outlet (11) of the gas separation system (10) independently of one another via a system of valves (V1-V9), and wherein the second outlet (11) of the gas separation system (10) is selectively connectable to the suction side (7a) of a vacuum source (7),
wherein a control unit (4) is preferably provided which is designed to selectively automatically connect the second outlet (11) of the gas separation system (10) to the suction side (7a) of the vacuum source (7) when the gas separation system (10) is operating in VPSA mode.

13. The system (1) according to any one of claims 10 to 12,
wherein a heat exchanger system (14) is further provided to transfer at least a portion of the thermal energy released in the gas separation system (10) and/or in the compressor system (3) to the initial gas mixture in order to warm the initial gas mixture to a temperature of preferably 10° C to 30° C, and even more preferentially 15° C to 25° C; and/or
wherein a heat exchanger system (15) is further provided to transfer at least a portion of the thermal energy released in the gas separation system (10) and/or in the compressor system (3) to the nitrogen-enriched gas mixture provided at the outlet (10b) of the gas separation system (10); and/or
wherein a catalyst system (16, 17) is further provided which is able to be supplied as needed with at least a portion of the nitrogen-enriched gas mixture provided at the outlet (10b) of the gas separation system (10) and/or a portion of the ambient air of the enclosed room (2) in order to produce an inert gas mixture through a chemical conversion of a reductant, wherein the outlet of the catalyst system (16, 17) is connected or connectable to the enclosed room (2) so as to introduce the inert gas mixture produced in said catalyst system (16, 17) into the spatial atmosphere of the enclosed room (2).

## Revendications

1. Procédé d'inertisation dans lequel on établit et/ou on maintient dans l'atmosphère intérieure d'un local fermé (2) une teneur en oxygène réduite par comparaison à l'air environnant normal, dans lequel le procédé comprend les étapes suivantes :
i) on prépare un mélange gazeux de départ, qui comprend de l'oxygène, de l'azote, et le cas échéant d'autres composants ;
ii) on comprime le mélange gazeux de départ préparé dans un système compresseur (3) ;
iii) on admet le mélange gazeux de départ comprimé à un système de séparation de gaz (10) pour séparer au moins une partie de l'oxygène contenu dans le mélange gazeux de départ comprimé, afin de préparer à la sortie (10b) du système de séparation de gaz (10) un mélange gazeux enrichi en azote ; et
iv) on introduit au moins une partie du mélange gazeux préparé à la sortie (10b) du système de séparation de gaz (10) et enrichi en azote, dans l'atmosphère intérieure du local fermé (2) de telle façon que l'on établit et/ou que l'on maintient dans l'atmosphère intérieure du local fermé (2) la teneur en oxygène prédéterminée et réduite par comparaison à l'air environnant normal,
**caractérisé en ce que**, lorsque l'on doit augmenter la quantité, à préparer par unité de temps à la sortie (10b) du système de séparation de gaz (10), du mélange gazeux enrichi en azote, on augmente le degré de compression effectuée dans l'étape ii) du procédé, en particulier jusqu'à une valeur qui dépend de la quantité, à préparer par unité de temps, du mélange gazeux enrichi en azote, et
lorsque la quantité, à préparer par unité de temps à la sortie (10b) du système de séparation de gaz (10), du mélange gazeux enrichi en azote doit être augmentée, le système de séparation de gaz (10) est amené à fonctionner dans un mode dit PSA, et sinon le système de séparation de gaz (10) est amené à fonctionner dans un mode dit VPSA,
dans lesquels le mode PSA correspond à un mode à adsorption par changement de pression et le mode VPSA correspond à un mode à adsorption par changement vide/pression.

2. Procédé d'inertisation selon la revendication 1,
dans lequel le système de séparation de gaz (10) comprend un premier et un second récipient adsorbeur (12, 13) chacun avec un matériau absorbant, dans lequel les récipients adsorbeurs (12, 13) sont amenés à fonctionner en phase opposée de telle manière que l'un des deux récipients adsorbeurs (12, 13) se trouve dans une phase d'adsorption, pendant laquelle le matériau absorbant du récipient adsorbeur (12, 13) adsorbe au moins une partie de l'oxygène hors du mélange gazeux de départ admis dans l'étape iii) du procédé, alors que l'autre des deux récipients adsorbeurs (13, 12) se trouve dans une phase de régénération, pendant laquelle l'oxygène est désorbé hors du matériau absorbant de l'autre récipient adsorbeur (13, 12), et il est en particulier prévu qu'avant une inversion entre la phase d'adsorption et la phase de régénération, les entrées respectives (12a, 13a) et les sorties respectives (12b, 13b) des récipients adsorbeurs (12, 13) sont brièvement mises en court-circuit en termes d'écoulement.

3. Procédé d'inertisation selon la revendication 1 ou 2,
dans lequel en cas d'incendie ou bien lorsqu'il s'agit de réduire encore brièvement, pour une autre raison, la teneur en oxygène dans l'atmosphère intérieure du local fermé (3) par comparaison à la teneur en oxygène établie et/ou maintenue dans l'étape iv) du procédé, ou encore si l'on doit, en raison d'un échange d'air plus important, augmenter la quantité, à préparer par unité de temps à la sortie (10b) du système de séparation de gaz (10), du mélange gazeux enrichi en azote, ou si l'on augmente, en raison d'une défaillance d'une autre source de gaz inerte associé au local fermé (2), en particulier en cas de défaillance d'un autre système de séparation de gaz associé au local fermé (2), le degré de compression exécuté dans l'étape ii) du procédé ; et/ou lorsqu'on augmente en cas de besoin le degré de compression exécuté dans l'étape ii) du procédé aussi longtemps et de préférence par étapes, que la quantité, préparée par unité de temps à la sortie (10b) du système de séparation de gaz (10) du mélange gazeux enrichi en azote corresponde à la quantité à préparer par unité de temps du mélange gazeux enrichi en azote ; et/ou
dans lequel le système de compression (3) est conçu pour comprimer, dans l'étape ii) du procédé, le mélange gazeux de départ préparé en cas de besoin jusqu'à des plages de pression différentes, de préférence fixées ou susceptibles d'être fixées au préalable, et de préférence de telle sorte qu'en fonction de la raison ou de la cause de l'augmentation nécessaire de la quantité, à préparer par unité de temps à la sortie (10b) du système de séparation de gaz (10), du mélange gazeux enrichi en azote, la compression du mélange gazeux de départ a lieu, dans l'étape ii) du procédé, de préférence automatiquement et de manière encore préférée de manière sélective automatiquement à l'une des plages de pression fixées ou susceptible d'être fixées au préalable.

4. Procédé d'inertisation selon l'une des revendications 1 à 3,
dans lequel pour préparer le mélange gazeux de départ dans l'étape i) du procédé, on prélève hors du local (2) une partie de l'air intérieur contenu dans le local fermé (2) d'une manière régulée, et on ajoute de l'air frais de manière régulée à la partie prélevée de l'air intérieur,
dans lequel la quantité d'air frais qui est mélangée avec l'air intérieur prélevé du local (2) est de préférence choisie de telle façon que la quantité d'air intérieur prélevée par unité de temps hors du local (2) est identique avec la quantité du mélange gazeux enrichi en azote qui est introduite dans l'atmosphère intérieure du local (2) dans l'étape iv) du procédé.

5. Procédé d'inertisation selon l'une des revendications 1 à 4,
dans lequel le système de séparation de gaz (10) comprend au moins un récipient adsorbeur (12, 13) avec un matériau adsorbant, dans lequel le système de compresseur (3) est susceptible d'être connecté à une entrée (12a, 13a) du récipient adsorbeur (12, 13), afin d'admettre, dans une phase d'adsorption du récipient adsorbeur (12, 13), le mélange gazeux de départ comprimé jusque dans le récipient adsorbeur (12, 13), de sorte que l'oxygène est adsorbé hors du mélange gazeux de départ par le matériau adsorbant et on prépare le mélange gazeux enrichi en azote au niveau d'une sortie (12b, 13b) du récipient adsorbeur (12, 13),
dans lequel une source de vide (7) peut être connectée, de préférence de manière sélective, avec l'entrée (12a, 13b) du récipient adsorbeur (12, 13), ou bien une source d'air comprimé peut être connectée, de préférence de manière sélective, avec la sortie (12b, 13b) du récipient adsorbeur (12, 13) afin d'évacuer, dans une phase de régénération du récipient adsorbeur (12, 13), au moins une partie de l'oxygène adsorbé par le matériau adsorbant via l'entrée (12a, 13a) du récipient adsorbeur (12, 13), et ainsi de régénérer le matériau adsorbant.

6. Procédé d'inertisation selon l'une des revendications 1 à 5, dans lequel le procédé comprend en outre les étapes suivantes :
- admission d'un mélange gazeux de départ comprimé vers un autre système de séparation de gaz, et séparation d'au moins une partie de l'oxygène contenu dans le mélange gazeux de départ comprimé, afin de préparer à la sortie de l'autre système de séparation de gaz un mélange gazeux enrichi en azote ; et
- introduction d'au moins une partie du mélange gazeux, préparé à la sortie de l'autre système de séparation de gaz et enrichi en azote, jusque dans l'atmosphère intérieure du local fermé (2),
dans lequel, quand l'autre système de séparation de gaz est défaillant ou, s'il n'est pas possible de préparer, pour une autre raison, le mélange gazeux enrichi en oxygène à la sortie de l'autre système de séparation de gaz, ou bien si la quantité, de mélange gazeux enrichi en azote, à préparer par unité de temps à la sortie de l'autre système de séparation de gaz, du mélange gazeux enrichi en azote est située au-dessous d'une valeur de conception pour l'autre système de séparation de gaz, le système de séparation de gaz (10) est amené à fonctionner dans un mode PSA, et dans lequel sinon le système de séparation de gaz (10) est amené à fonctionner dans un mode VPSA,
dans lequel la commutation du mode VPSA vers le mode PSA du système de séparation de gaz (10) a lieu de préférence automatiquement dès que l'on détecte que la quantité qu'il est possible de préparer par unité de temps à la sortie de l'autre système de préparation de gaz est située au-dessous d'une valeur de conception pour l'autre système de séparation de gaz.

7. Procédé d'inertisation selon l'une des revendications 1 à 6,
dans lequel au moins une partie de l'énergie thermique libérée dans le système de séparation de gaz (10) et/ou dans le système compresseur (3) est utilisée pour réchauffer le mélange gazeux de départ, de préférence de telle façon que le mélange gazeux de départ présente une température de 10° C à 30° C, et de manière encore plus préférée de 15° C à 25° C ; et/ou
dans lequel au moins une partie de l'énergie thermique libérée dans le système de séparation de gaz (10) et/ou dans le système compresseur (3) est utilisée pour réchauffer le mélange gazeux préparé à la sortie (10b) du système de séparation de gaz (10) et enrichi en azote.

8. Procédé d'inertisation selon l'une des revendications 1 à 7,
dans lequel le système compresseur (3) comprend un premier compresseur (3.1) et au moins un second compresseur (3.2), dans lequel le degré de compression exécutée dans l'étape ii) du procédé est augmenté en mettant le second compresseur (3.2) en route en plus du premier compresseur (3.1).

9. Procédé d'inertisation selon l'une des revendications 1 à 8,
dans lequel dans un cas dans lequel on doit augmenter la quantité à préparer par unité de temps du mélange gazeux enrichi en azote, au moins une partie du mélange gazeux, préparé dans l'étape iii) du procédé à la sortie (10b) du système de séparation de gaz (10) et enrichi en azote et/ou une partie de l'air intérieur contenu dans le local fermé (2) est admise à un catalyseur (16, 17) dans lequel on engendre, à partir du mélange gazeux enrichi en azote ou à partir de la partie de l'air intérieur admis et par conversion chimique d'un réducteur, un mélange gazeux inerte, dans lequel le mélange gazeux inerte engendré dans le catalyseur (16, 17) est ensuite introduit dans l'atmosphère du local fermé (2), et le réducteur est de préférence un matériau combustible, en particulier un gaz combustible et de préférence du monoxyde de carbone.

10. Installation (1) avec laquelle une teneur en oxygène prédéterminée et réduite par comparaison à l'air environnant normal est établie et maintenue dans l'atmosphère intérieure d'un local fermé (2), dans laquelle l'installation (1) comprend un système compresseur (3) pour comprimer un mélange gazeux de départ, et un système de séparation de gaz (10) relié avec le système compresseur (3), dans lequel au moins une partie de l'oxygène contenu dans le mélange gazeux de départ comprimé est séparée,
**caractérisée en ce que**
le système de séparation de gaz (10) est conçu pour être amené à fonctionner au choix dans un mode VPSA ou dans un mode PSA, dans laquelle il est de préférence prévu un moyen de commande (4) qui est conçu, dans un cas où l'on doit augmenter la quantité, à préparer par unité de temps à la sortie (10b) du système de séparation de gaz (10), d'un mélange gazeux enrichi en azote, pour commuter sélectivement automatiquement le système de séparation de gaz (10) du mode VPSA vers le mode PSA,
dans laquelle le rapport de compression du système compresseur (3) est de préférence réglable de telle façon que le mélange gazeux de départ est susceptible d'être comprimé dans le système compresseur (3) au choix à une première valeur de pression faible ou à une seconde valeur de pression élevée, en particulier à une pression de 1,5 à 2,0 bar ou 7,0 à 9,0 bar, et dans lequel le moyen de commande (4) est conçu, dans un cas où l'on doit augmenter la quantité à préparer par unité de temps du mélange gazeux enrichi en azote, pour piloter sélectivement automatiquement le système compresseur (3) de telle façon que le mélange gazeux de départ est comprimé dans le système compresseur (3) jusqu'à la seconde valeur de pression élevée,
dans laquelle le système compresseur comprend de préférence un premier compresseur (3.1) et au moins un second compresseur (3.2) susceptible d'être piloté indépendamment du premier compresseur (3.1), dans lequel le premier et le second compresseur (3.1, 3.2) sont réalisés de telle façon qu'en mettant en marche le second compresseur (3.2) en supplément le degré de compression du mélange gazeux de départ est augmenté, dans laquelle le mode PSA correspond à un mode à adsorption par changement de pression et le mode VPSA et un mode à adsorption par changement vide/pression.

11. Installation (1) selon la revendication 10,
dans laquelle l'installation (1) comprend un autre système de séparation de gaz pour préparer un mélange gazeux enrichi en azote, et dans laquelle le moyen de commande (4) est conçu, quand l'autre système de séparation de gaz est défaillant ou s'il n'est pas possible pour une autre raison de préparer avec l'autre système de séparation de gaz un mélange gazeux enrichi en azote, ou encore si la quantité, susceptible d'être préparée par unité de temps par l'autre système de séparation de gaz, du mélange gazeux enrichi en azote est située au-dessous d'une valeur de conception pour l'autre système de séparation de gaz, pour commuter le système de séparation de gaz (10) du mode VPSA vers le mode PSA, et la commutation du mode VPSA vers le mode PSA a lieu de préférence automatiquement, dès que l'on détecte que la quantité, susceptible d'être préparée par unité de temps par l'autre système de séparation de gaz, du mélange gazeux enrichi en azote, est située au-dessous d'une valeur de conception pour l'autre système de séparation de gaz.

12. Installation (1) selon la revendication 10 ou 11,
dans laquelle le système de séparation de gaz (10) comprend les éléments suivants :
- une entrée (10a) connectée ou susceptible d'être connectée avec une sortie (3b) du système compresseur (3) pour admettre le mélange gazeux de départ comprimé ;
- une première sortie (10b), connectée ou susceptible d'être connectée avec le local fermé (2) pour admettre un mélange gazeux enrichi en azote dans l'atmosphère intérieure du local fermé (2) ;
- une seconde sortie (11) pour évacuer un mélange gazeux enrichi en azote hors du système de séparation de gaz (10) ; et
- au moins un premier et un second récipient adsorbeur (12, 13), qui comprennent chacun un matériau adsorbant,
dans laquelle le premier et le second récipient adsorbeur (12, 13) sont susceptibles d'être connectés, chacun via un système de valve (V1-V9) indépendamment l'un de l'autre avec l'entrée (10a), avec la première sortie (10b) et/ou avec la seconde sortie (11) du système de séparation de gaz (10), et dans laquelle la seconde sortie (11) du système de séparation de gaz (10) est susceptible d'être connectée au choix avec le côté aspiration (7a) d'une source de vide (7),
dans laquelle il est de préférence prévu un moyen de commande (4) qui est conçu pour connecter sélectivement automatiquement la seconde sortie (11) du système de séparation de gaz (10) avec le côté aspiration (7a) de la source de vide (7) quand le système de séparation de gaz (10) est amené à fonctionner dans le mode VPSA.

13. Installation (1) selon l'une des revendications 10 à 12,
dans laquelle il est en outre prévu un système échangeur de chaleur (14) pour transférer au moins une partie de l'énergie thermique libérée dans le système de séparation de gaz (10) et/ou dans le système compresseur (3) vers le mélange gazeux de départ, afin de réchauffer le mélange gazeux de départ à une température de préférence de 10° C à 30° C, et de manière encore plus préférée de 15° C à 25° C ; et/ou
dans laquelle il est en outre prévu un système échangeur de chaleur (15) pour transférer au moins une partie de l'énergie thermique libérée dans le système de séparation de gaz (10) et/ou dans le système compresseur (3) vers le mélange gazeux préparé à la sortie (10b) du système de séparation de gaz (10) et enrichi en azote ; et/ou
dans laquelle il est en outre prévu un système catalyseur (16, 17) auquel on admet en cas de besoin au moins une partie du mélange gazeux préparé à la sortie (10b) du système de séparation de gaz (10) et enrichi en azote et/ou une partie de l'air intérieur contenu dans le local fermé (2), afin d'engendrer, par conversion chimique d'un réducteur, un mélange gazeux inerte, dans laquelle la sortie du système catalyseur (16, 17) est connectée ou susceptible d'être connectée avec le local fermé (2) pour introduire le mélange gazeux inerte engendré dans le catalyseur (16, 17), vers l'atmosphère intérieure du local fermé (2).
